# EUROPÄISCHE PATENTSCHRIFT

(11) **EP 3 830 813 B1**
(45) Veröffentlichungstag und Bekanntmachung des Hinweises auf die Patenterteilung: **10.05.2023**
(21) Anmeldenummer: 19748509.7
(22) Anmeldetag: 29.07.2019
(51) Int. Cl.: G09B 23/30, G09B 23/34

(54) **SYSTEM ZUR VALIDIERUNG UND ZUM TRAINING INVASIVER EINGRIFFE**
SYSTEM FOR VALIDATING AND TRAINING INVASIVE INTERVENTIONS
SYSTÈME DE VALIDATION ET D'ENTRAÎNEMENT D'INTERVENTIONS INVASIVES

(30) Priorität: 03.08.2018 DE 102018118918
(43) Veröffentlichungstag der Anmeldung: 09.06.2021
(73) Patentinhaber: Phacon GmbH, 04229 Leipzig (DE)
(72) Erfinder: HAASE, Robert, 04229 Leipzig (DE); MÖCKEL, Hendrik, 04229 Leipzig (DE)
(74) Vertreter: Kailuweit & Uhlemann Patentanwälte Partnerschaft mbB
(86) Internationale Anmeldenummer: PCT/EP2019/070345
(87) Internationale Veröffentlichungsnummer: WO 2020/025533

(56) Entgegenhaltungen:
- WO-A1-2015/075038
- WO-A1-2018/126254
- WO-A2-2014/018703
- DE-A1-102005 056 997
- GB-A- 2 338 582
- US-A1- 2016 027 345

## Beschreibung

Die Erfindung betrifft ein System zur Validierung und zum Training invasiver Eingriffe in der Human- und Veterinärmedizin.

Dabei werden Parameter und szenarioabhängige Steuersignale festgelegt, die über den Lernerfolg, die Qualität und somit eine Erfolgskontrolle des geübten Eingriffes Auskunft geben. Die geübten Eingriffe umfassen chirurgische und minimal-invasive chirurgische Techniken mittels operativer Instrumente wie beispielsweise das Setzen von Implantaten oder Kanülen, welche unter realistischen Bedingungen am Trainingsmodell trainiert werden.

Das System umfasst ein dem menschlichen oder tierischen Körper anatomisch nachgebildetes Trainingsmodell, einen Flüssigkeitskreislauf, aufweisend mindestens ein Flüssigkeitsreservoir, mindestens eine Pumpeneinheit und ein Schlauchsystem sowie mindestens eine Detektionsvorrichtung.

Der Gegenstand des vorliegenden Verfahrens ist die Validierung und das Training operativer Eingriffe mit Hilfe des erfindungsgemäßen Systems.

Die bisher veröffentlichten Trainingsmodelle dienen vaskulären Anwendungen wie u.a. dem Punktieren von Gefäßen um beispielsweise Operationen, Blutentnahmen oder Injektionen zu üben.

Die EP 0 990 227 B1 beschreibt ein chirurgisches Trainingsgerät. Dieses weist ein Gehäuse in Gestalt eines geschlossenen Behälters auf, der z.B. einer Bauchhöhle ähnelt, in welchem Nachbildungen wie beispielsweise Blutgefäße angeordnet werden können. Der Behälter ist weiterhin mit einer Pumpe versehen, die einen Blutstrom durch Arterien und Venen simuliert und beispielsweise einen Blutfluß durch Arterien realisiert. Das dazu verwendete Fluid wird dabei unter Druck gesetzt.

In der DE 42 12 908 A1 wird ein chirurgisches Simulationsmodell insbesondere der Bauchhöhle und für laparoskopische Eingriffen offenbart, in welchem u.a. auch Teile des Blutkreislaufes als zirkulierender Flüssigkeitskreislauf eingebracht werden können. Dabei haben Leitungen für elektrischen Strom, Flüssigkeiten, Gas oder Licht Zugang nach außen. Beispielsweise sind Nerven als elektrischen Strom leitenden Schaltkreis dargestellt. Die Körperhöhle selbst ist gasdicht bzw. flüssigkeitsdicht abschließbar.

Die GB 2 338 582 A beschreibt einen chirurgischen Simulator für endovaskuläre Eingriffe. Dazu weist der Simulator einen anatomisch geformten Torso mit einer Aussparung im Bauchbereich auf, in welcher das zu behandelnde Körperteil, z.B. Nieren oder eine austauschbare transparente Aorta-Nachbildung, welche mit einer Flüssigkeit durchpumpt wird, positioniert ist. Weiterhin umfasst der Torso Aussparungen in der Leistenregion, um endovaskuläre Stent-Transplantate einzuführen. Zum Simulator gehören weiterhin unterschiedlich ausgebildete austauschbare Platten, die formschlüssig auf die Öffnung der Aussparung im Bauchbereich des Torsos gelegt werden können, um diesen abzuschließen. Dabei entsprechen die Platten Hautimitaten und sind zur visuellen Beobachtung transparent ausgestaltet.

In der US 4,182,054 A wird ein Phantomarm aus einem hohlen Bauteil in Form eines menschlichen Arms offenbart. Der Phantomarm weist im Bereich des Handgelenkes und der Ellenbogenbeuge Nuten auf, in denen Schläuche als nachgeformte Arterien verlaufen, welche aus einem elastischen Schlauch bestehen. Der Phantomarm und insbesondere die in den Nuten verlaufende Schlauchleitung sind mit einer künstlichen Latexhaut aus elastischem Material überzogen. An anatomisch vorgegebenen Einstichstellen ist der Korpus unter der Latexhaut ausgespart. Die Schlauchleitung ist mit einem oberhalb des Arms angeordneten Flüssigkeitsbehälter mit künstlichem Blut verbunden, um den notwendigen Druck in der Schlauchleitung zu erzeugen. Dieser kann weiterhin durch eine periodisch arbeitende Pumpe erzeugt werden.

In der DE 20 2009 004 115 U1 werden Modelle zum Training invasiver Techniken beschrieben, in welche auch Nachbildungen von Blutgefäßen aus Silikonschläuchen eingebettet sind. Dabei sollen Blutgefäße ertastet und punktiert werden und aus Behandlungsfehlern sollen Blutungen und Blutergüsse resultieren. Die Blutgefäße stehen dabei unter pulsierendem Blutdruck, wobei allerdings nicht offenbart ist, wie dies realisiert werden soll.

Zur Simulation von Verletzungen von Gefäßen sind Pumpen bekannt, welche so gesteuert werden, dass diese abhängig von der Art der Verletzung mehr Blut in das Gefäß pumpt und der Übende die Wunde wieder verschließen muss.

In der US 5,620,326 A ist ein anatomischer Simulator zum videoskopischen chirurgischen Training bekannt, der eine Vielzahl synthetischer anatomischer Strukturen und ein elastisches und flexibles synthetisches Bindegewebe umfasst, welches die synthetischen und anatomischen Strukturen zusammenbindet und eine synthetische Gewebeschicht mit vorbestimmter Reißfestigkeit definiert. Der Simulator dient zum Erlernen des Sezierens einer anatomischen Struktur, während die weiteren anatomischen Strukturen bei fachgerechter Arbeit erhalten bleiben. Die Strukturen und Bindegewebe sind in einem Fluidbehälter mit synthetischer Körperflüssigkeit eingebettet, welcher mit einem künstlichen Körperteil aus Hartmaterial abgedeckt werden kann, um annähernd lebensechte Seziervoraussetzungen vorzutäuschen. Durch eine Pumpe wird ein kontinuierlicher Blutkreislauf simuliert. Wird beim Training ein Schlauch getroffen, fließt ein höherer Fluidstrom durch das Gefäß, bis dieses genäht ist.

Ein sehr ähnliches Modell ist zum Üben des Einstechens in Blutgefäße und/oder der Gefäßresektion an verschiedenen anatomischen Nachbildungen in der DE 44 14 832 A1 beschrieben. Eine Ballpumpe simuliert dabei den Puls. Die Blutgefäße sind ertastbar und bestehen aus einem weich nachgiebigen Kunststoffmaterial, z.B. Polyurethan, welches selbstdichtend ist und eine durch das Einstechen einer Kanüle entstandene Öffnung nach dem Herausziehen der Kanüle selbsttätig schließt.

Die DD 230 664 A3 offenbart ein Übungsphantom in Gestalt eines menschlichen Körpers mit einer Blutkreislauf-Imitation. Dabei werden an verschiedenen Körperstellen arterielle und venöse Blutungen sowie im Halsbereich ein fühlbarer Pulsschlag simuliert. Dies wird durch Schlauchleitungen realisiert, welche verschließbare Öffnungen zur Simulation von Blutaustrittsstellen sowie Absperrelemente zum Absperren bestimmter Teile des Leitungssystems aufweisen. Dabei stehen die Absperrelemente in Verbindung mit einer Steuereinheit, welche mit einer Flüssigkeitspumpe im Rumpfteil des Phantoms angeordnet ist. Mithilfe des Übungsphantoms sollen u.a. aus der Art und Intensität auftretender Blutungen sowie der Frequenz des Pulsschlages Rückschlüsse auf den Allgemeinzustand des Patienten gezogen werden.

In der DE 10 2016 225 167 A1 wird eine Ex vivo- Lungenkreislauf- und Ventilations-Vorrichtung zum Training chirurgischer und minimal-invasiver chirurgischer Eingriffe offenbart. Dazu umfasst die Vorrichtung einen gasdicht verschließbaren Behälter zur Aufnahme eines organischen Gewebes wie einer Lunge. Dabei wird die Lunge über einen Ventilationsschlauch beatmet. Die Drucksteuerung und Luftleckmessung erfolgt über einen Drainageschlauch. Über Perfusionsschläuche wird eine Körperflüssigkeit wie bspw. Blut von einem Flüssigkeitskreislauf kommend in die Lungenarterie geleitet und fließt über die Lungenvene, welche durch die Neigung des Behälters tiefer liegend angeordnet ist, über einen Abfluss zurück in den Flüssigkeitskreislauf.

Das Dokument DE 10 2015 008 050 A1 zeigt ein Modellsystem eines Blutkreislaufes, bei denen der Blutfluss für die nichtinvasive transabdominale Plethysmografie realistisch mit zwei verschiedenen und voneinander unabhängig einstellbaren Blutkreisläufen (maternal und fetal) mit sich unterscheidenden Pulsformen und Pulsfrequenzen nachgebildet wird. Die US 2014/0272872 A1 zeigt ein ähnlich ausgebildetes Trainingsmodell mit der Nachbildung eines Blutkreislaufes, bei welcher ebenfalls mittels Pumpen der Blutfluss simuliert wird. In der US 2014/0127663 A1 werden mittels eines Trainingssimulators verschiedene Szenarien an einer anatomischen Nachbildung des menschlichen Körpers nachgebildet, u.a. die Vitalfunktionen eines Neugeborenen.

Jedoch weisen die aus dem Stand der Technik bekannten Trainingsmodelle nachteilig keine realistischen Szenarien auf, welche zum Beispiel einhergehen mit einem erhöhten Adrenalinausstoß oder einem erhöhten Pulsschlag. Dabei entspricht der Pulsschlag der Herzfrequenz. Da die aus dem Stand der Technik bekannten Trainingsmodelle lediglich Blutkreisläufe simulieren, ist beispielsweise bei einem Verbluten durch Verletzung von Risikostrukturen die Anpassung der Szenarien an individuell vorliegende Verletzungen nicht gegeben.

Auch lassen sich die Parameter des Blutkreislaufes sowie weitere Patientendaten nicht individuell an die jeweiligen Patienten hinsichtlich ihrer Anatomie oder ihres Alters anpassen.

So wird in den bisher offenbarten Dokumenten nicht beschrieben, wie beispielsweise die Pumpe erkennt, dass sie stärker pumpen muss. Auch die Interaktion von chirurgischem Instrument mit Blutgefäßen oder auch anderen Gefäßen wie Nervenleitungen ist im Stand der Technik nicht hinreichend offenbart.

US 2016/027345 A1 offenbart ein kardiovaskuläres Simulationssystem zum Training und Testen von vaskulären Operationen, indem anatomisch und physiologisch genaue Darstellungen eines kardiovaskulären Systems im Normal- oder Krankheitszustand simuliert werden. Das System umfasst mehrere Module. So dient ein Herzsystemmodul (2100) mit einer als erste Herzkammer ausgebildeten Atrium-Anordnung (2108) zur Stimulation der Herzfunktion, indem der Blutfluss durch ein Atrium eines Herzens realisiert wird. Dazu ist eine in dem entsprechenden Gehäuse befindliche Belüftungseinrichtung (2120) mit einer fluidgefüllten flexibel ausgebildeten inneren Kammer (2122) fluidisch verbunden, welche bei Kontraktion das darin enthaltende Fluid nach außen stößt und anschließend expandiert. Eine als zweite Herzkammer ausgebildete Ventrikel Anordnung (2110) simuliert den anschließenden Blutfluss durch ein Herz-Ventrikel. Ferner steht ein Blutgefäßsystem-Modul (2200) mit einem als Arterie oder Vene ausgebildetem Schlauch fluidisch in Kontakt mit dem Herzsystemmodul. Weiterhin ist ein pneumatisches Versorgungssystem (1118) mit der Atrium-Anordnung und der Ventrikel-Anordnung fluidisch verbunden. Über eine Kontrolleinheit (1600) werden die Parameter des Simulationssystems kontrolliert bzw. modifiziert.

WO 2015/075038 A1 offenbart ein modular aufgebautes chirurgisches Trainingssystem zum Trainieren chirurgischer Eingriffe mit realen chirurgischen Instrumenten, welches zum Trainieren unterschiedlichster chirurgischer Eingriffe geeignet ist. Das Trainingssystem umfasst ein wiederverwendbares Basismodul und ein anatomische Strukturen nachbildendes und zumindest ein Verbrauchsmedium wie nachgebildetes Blut aufnehmbares Trainingsmodul. Dabei sind das Trainingsmodul und das Basismodul über eine Kombinationsschnittstelle lösbar miteinander verbunden. Zudem sind über die Kombinationsschnittstelle pneumatische, mechanische und/oder elektrische Energie vom Basismodul zum Trainingsmodul und/oder elektrische Signale zwischen Basismodul und Trainingsmodul übertragbar. Ferner weisen das Basismodul und Trainingsmodul über die Kombinationsschnittstelle lösbar verbundene Fördermittel auf, durch welche ein Verbrauchsmedium in die anatomischen Strukturen förderbar ist.

WO 2014/018703 A2 offenbart ein anatomisches Simulationsmodell für das chirurgische Training zur Demonstration, Übung oder Bewertung eines chirurgischen Eingriffs an der menschlichen Lunge. Das Modell umfasst dabei eine Vielzahl von Segmenten, die miteinander verbunden sind, um ein Skelettgerüst zu bilden, das einen Teil der menschlichen Anatomie darstellt. Der Skelettrahmen umschließt mindestens eine Nachbildung von Herz und Lunge. Weiterhin darin enthalten sind eine Vielzahl von hohlen Kanälen, die sich zumindest teilweise durch die Lunge erstrecken, um Druckflüssigkeit hindurchzuleiten und um das Verhalten des Herzens und des kardiopulmonalen Systems eines Patienten während eines chirurgischen Eingriffs an der Lunge des Patienten zu simulieren. Die Kanäle bilden einen geschlossenen Kreislauf und umfassen eine Vielzahl von darin definierten Knoten, die so positioniert sind, dass sie Lymphknoten im Patienten simulieren.

WO 2018/126254 A1 zeigt einen Patientensimulator, der mit einer diagnostischen oder therapeutischen medizinischen Vorrichtung interagiert, umfassend eine Rechenvorrichtung, die mit einem Patientenmodul gekoppelt ist. Das Patientenmodul enthält eine hydraulische Ausrüstung, die eine grundlegende Flüssigkeitsverbindung mit der therapeutischen Vorrichtung simuliert. Die Rechenvorrichtung verwaltet physikalische und virtuelle Daten, stellt algorithmische Berechnungen zur Simulation hypothetischer Patientenvitalzeichen und des langfristigen klinischen Verlaufs bereit und simuliert die entsprechenden Flüssigkeitseigenschaften. Das Simulationssystem führt automatisch ein schrittweises klinisches Szenario aus, das in einem Tabellenkalkulationsformat mit Patientenbedingungen und Ausrüstungsszenarien spezifiziert ist und auch audiovisuelle Stimuli von Operationssälen und diagnostischen Klinikumgebungen sowie Datenaufzeichnungsfunktionen enthält. Das therapeutische Gerät kann u.a. als Herz-Lungen-Maschine, als Maschine zur extrakorporalen Membranoxygenierung, als Dialysegerät und als Gerät für die hypertherme intraperitoneale Chemotherapie ausgebildet sein.

DE 10 2005 056997 A1 offenbart ein Simulationssystem zum Training und zur Evaluation chirurgischer Eingriffe. Es umfasst ein anatomisch nachgebildetes Phantom, welches als Nervenstränge, Sehnen, Muskeln, Arterien, innere Organe ausgebildete erlaubte Bereiche und Risikobereiche aufweist, welche von chirurgischen Instrumenten in unterschiedlich restriktiven Abstufungen berührt bzw. durchdrungen werden dürfen oder nicht. Jedem Phantom zugehörig sind ein oder mehrere Protokolle, die den spezifischen chirurgischen Ablauf in den einzelnen Arbeitsschritten des Chirurgen (Workflow) abbilden. Auf der Grundlage dieser Protokolle werden Parameter, welche u.a. die Verletzung der Risikobereiche umfassen, festgelegt und damit die Qualität des geübten Eingriffes und somit der Lernerfolg analysiert.

Aufgabe ist es daher, ein System bereitzustellen, welches die Nachteile des Standes der Technik überwindet.

Dabei soll ein Trainingssystem zur Verfügung gestellt werden, welches für die Validierung und zum Training verschieden gestalteter invasiver und operativer Eingriffe in der Human- und Veterinärmedizin geeignet und dafür angepasst und ausgebildet ist. Durch diese individuelle Ausgestaltung des Trainingssystems soll ein effektives, spezialisiertes und fokussiertes Training gewährleistet werden, welches durch eine an das jeweils durchgeführte Training entsprechend angepasste Steuerung und Überwachung realisiert werden soll.

Es wäre zudem in hohem Maße wünschenswert, dass das System in Echtzeit auf Verletzungen oder dem Erreichen bestimmter Positionen oder Strukturen reagiert, um ein realistisches Szenario für den Benutzer zur Verfügung zu stellen.

Erfindungsgemäß wird die Aufgabe durch ein System zur Validierung und zum Training invasiver Eingriffe in der Human- und Veterinärmedizin gemäß den unabhängigen Ansprüchen gelöst. Vorteilhafte Ausgestaltungen der Erfindung sind in den abhängigen Ansprüchen angegeben.

Ein erster Aspekt der Erfindung betrifft ein System zur Validierung und zum Training invasiver Eingriffe in der Human- und Veterinärmedizin, welches ein dem menschlichen oder tierischen Körper anatomisch nachgebildetes Trainingsmodell umfasst. Das Trainingsmodell weist dabei eine anatomische Nachbildung eines Körperteils des menschlichen oder tierischen Körpers mit einer Aussparung sowie eine anatomische Nachbildung einer austauschbaren Übungsregion, welche in die Aussparung der anatomischen Nachbildung des Körperteils einsetzbar ausgebildet ist, eine Vorderseite aufweist, welche von außen zugänglich ist, eine Rückseite aufweist, welche zumindest teilweise formschlüssig mit der Aussparung der anatomischen Nachbildung des Körperteils verbunden ist, und anatomisch nachgebildete Bestandteile umfassend mindestens ein künstliches Blutgefäß und optional ein anatomisch nachgebildetes Nervengewebe und/oder einen anatomisch nachgebildeten Hautüberzug, welche in oder an der austauschbaren Übungsregion angeordnet sind, auf. Weiterhin umfasst das erfindungsgemäße System einen Flüssigkeitskreislauf, aufweisend mindestens ein Flüssigkeitsreservoir, welches eine Flüssigkeit enthält, mindestens eine Pumpeneinheit zur Erzeugung eines des menschlichen Herz-Kreislauf-Systems nachempfundenen Herzschlages und Pulses in dem mindestens einen künstlichen Blutgefäß, wobei die Pumpeneinheit mindestens eine Pumpe, zur Beförderung der Flüssigkeit in dem Flüssigkeitskreislauf und dem mindestens einen künstlichen Blutgefäß sowie zur Simulation des Blutflusses und des Pulses, und eine Steuereinheit, die mit der mindestens einen Pumpe gekoppelt ist, aufweist, sowie ein Schlauchsystem. Dabei umfasst das Schlauchsystem mindestens zwei erste Schläuche, deren eine Enden jeweils lösbar mit den Enden des mindestens einen künstlichen Blutgefäßes verbunden sind und deren andere Enden jeweils lösbar mit der mindestens einen Pumpe der Pumpeneinheit verbunden sind, wobei die mindestens zwei ersten Schläuche als erster Vorlauf und als erster Rücklauf dienen.

Das erfindungsgemäße System weist weiterhin mindestens eine elektronische Steuer-, Mess- und Auswerteeinheit und mindestens eine Detektionsvorrichtung zur Überwachung der Eingriffe in der austauschbaren Übungsregion auf, wobei die mindestens eine Detektionsvorrichtung in oder an den anatomisch nachgebildeten Bestandteilen der austauschbaren Übungsregion angeordnet ist und als elektrisch leitfähige Struktur und/oder als lichtleitende Struktur ausgebildet ist, und mit der Steuereinheit der Pumpeneinheit durch Mittel zur Signalübertragung verbunden ist, wobei das System derart ausgebildet ist, dass die Detektionsvorrichtung eine Interaktion des Benutzers mit den anatomisch nachgebildeten Bestandteilen der austauschbaren Übungsregion erfasst, wobei unter einer Interaktion zumindest eine teilweise Berührung oder Beschädigung bzw. Verletzung der anatomisch nachgebildeten Bestandteile der austauschbaren Übungsregion verstanden wird, und die durch die Interaktion erzeugten Daten als rückgekoppelte elektrische Signale durch die Mittel zur Signalübertragung an die elektronische Steuer-, Mess- und Auswerteeinheit übertragen werden, wobei die elektronische Steuer-, Mess- und Auswerteeinheit die Daten analysiert und darauf basierend ein szenarioabhängiges Steuersignal durch die Mittel zur Signalübertragung an die Steuereinheit der Pumpeneinheit übermittelt, wodurch eine selbstständige Reaktion und Steuerung der mindestens einen Pumpeneinheit durch eine Erhöhung oder Absenkung der Spannung, des Stromes oder der Frequenz der mindestens einen Pumpe erfolgt.

Ein weiterer Aspekt der Erfindung betrifft ein Verfahren zur Validierung und zum Training invasiver Eingriffe in der Human- und Veterinärmedizin mit dem erfindungsgemäßen System.

In einer Ausführungsform ist das gesamte erfindungsgemäße System oder zumindest die dafür relevanten Komponenten steril ausgebildet. Vorteilhaft wird dadurch eine realistische Trainingsmöglichkeit geboten. Unter Komponenten werden im Sinne der Erfindung alle Bestandteile des Systems verstanden, wie beispielsweise das Trainingsmodell mit anatomisch nachgebildeten Körperteil und austauschbarer Übungsregion und deren Bestandteile, der Flüssigkeitskreislauf wie Flüssigkeitsreservoir, Pumpeneinheit und Schlauchsystem und deren Bestandteile, die Detektionsvorrichtung, die Sensoren und die elektronische Mess-, Steuer- und Auswerteeinheit.

In Ausführungsformen ist das erfindungsgemäße System tragbar und kompakt ausgebildet ausgestaltet. Vorteilhaft kann es somit schnell und überall eingesetzt werden.

In einer Ausführungsform ist das erfindungsgemäße System modular ausgebildet. Vorteilhaft sind einzelne Komponenten dadurch austauschbar, je nach Bedarf und Anwendungsfall oder im Falle von Reparaturen, wodurch verschiedene Szenarien flexibel durchgeführt und einzelne Komponenten einfach und benutzerfreundlich hinzugefügt oder entnommen werden können. Weiterhin vorteilhaft funktioniert das erfindungsgemäße System eigenständig und autark abhängig von den eingetretenen Ereignissen. Ein Bediener, welcher beispielsweise das Szenario steuert, ist nicht notwendig.

Das erfindungsgemäße System umfasst ein dem menschlichen oder tierischen Körper anatomisch nachgebildetes Trainingsmodell.

Das Trainingsmodell dient dem Benutzer, im Folgenden auch Operateur, Chirurg oder Arzt genannt, zur Validierung und zum Training invasiver Eingriffe in der Human- und Veterinärmedizin.

In einer Ausführungsform ist das System als Simulationssystem ausgebildet. Dabei werden chirurgische und minimal-invasive chirurgische Techniken durch die Nachbildung von realen anatomischen und funktionellen Bedingungen am Patienten während eines chirurgischen bzw. minimal-invasiven chirurgischen Eingriffes simuliert und getestet. Das Trainingsmodell entspricht einem Patienten, welcher im Realfall durch den Benutzer zu behandeln ist.

Das Trainingsmodell stellt eine präzise und anatomisch getreue Nachbildung eines menschlichen oder tierischen Körpers dar.

Erfindungsgemäß weist das Trainingsmodell eine anatomische Nachbildung eines Körperteils, und eine anatomische Nachbildung einer austauschbaren Übungsregion auf.

In Ausführungsformen weist das Trainingsmodell eine Auffangschale auf. Vorteilhaft wird dadurch austretende Flüssigkeit bei einer Verletzung des mindestens einen künstlichen Blutgefäßes durch die Auffangschale aufgefangen und verursacht keine Verunreinigungen. Zudem kann somit die aufgefangene Flüssigkeit wiederverwendet werden. In einer Ausführungsform ist das Trainingsmodell in der Auffangschale gelagert und angeordnet. In einer alternativen Ausführungsform ist zumindest die austauschbare Übungsregion des Trainingsmodells in der Auffangschale gelagert und angeordnet.

Erfindungsgemäß umfasst das System eine anatomische Nachbildung eines Körperteils des menschlichen oder tierischen Körpers. Der Begriff "anatomische Nachbildung des Körperteils" bezeichnet im Sinne der Erfindung verschiedene Körperteile, welche alle anatomisch nachbildbar sind. Als Körperteil wird ein morphologisch als funktionelle Einheit erkennbares Segment des Körpers verstanden. Dazu zählen beispielsweise Bein, Arm, Becken, Kopf oder Wirbelsäule.

In Ausführungsformen weist die anatomische Nachbildung des Körperteils eines Patienten verschiedene Ausgestaltungen auf. Das entsprechend nachgebildete menschliche oder tierische Körperteil ist dabei anatomisch präzise und real nachgebildet. Die Art der Ausgestaltung des Körperteils basiert auf diversen Faktoren, wie beispielsweise dem nachempfundenen Alter des zu untersuchenden Patienten und/oder der entsprechenden Anatomie. Dabei ist jeder Körperteil eines Menschen oder Tieres als anatomische Nachbildung des Körperteils darstellbar.

Die Größe der anatomischen Nachbildung des Körperteils eines Menschen bezieht sich im Sinne der Erfindung auf jede Größe eines Körperteils, die ein Mensch, egal ob männlich oder weiblich, im Laufe seines Lebens annehmen kann. In einer Ausführungsform bezieht sich die Größe des Körperteils auf die nachgebildete realistische Anatomie eines durchschnittlichen erwachsenen Mannes oder einer durchschnittlichen erwachsenen Frau. In einer weiteren Ausgestaltung der Erfindung bezieht sich die Größe des Körperteils auf ein Kind, und entspricht dabei der Größe des Körperteils der jeweils nachgebildeten realistischen Anatomie eines Kindes. Die Größe des Körperteils eines Tieres bezeichnet im Sinne der Erfindung jede Körperteilgröße, die ein Tier, egal ob männlich oder weiblich, im Laufe des Lebens aufweisen kann. In einer alternativen Ausgestaltung der Erfindung ist die Größe des Körperteils kleiner oder größer als die nachgebildete realistische Anatomie bei einem Menschen oder Tier.

Weiterhin basiert die Art der Ausgestaltung der anatomischen Nachbildung des Körperteils auf den Krankheitsverlauf und/oder das Krankheitsstadium des zu untersuchenden Patienten. In Ausführungsformen ist die anatomische Nachbildung des Körperteils als anatomische Nachbildung des Schädels ausgebildet. In bevorzugten Ausführungsformen ist die anatomische Nachbildung des Körperteils als anatomische Nachbildung des Armes, ganz besonders bevorzugt als anatomische Nachbildung des menschlichen Unterarmes ausgebildet.

Erfindungsgemäß weist die anatomische Nachbildung des Körperteils eine Aussparung auf. Unter einer Aussparung wird im Sinne der Erfindung ein ausgesparter Raum bzw. eine Öffnung oder ein Hohlraum in der anatomischen Nachbildung des Körperteils verstanden. Die Aussparung kann verschiedene Dimensionen aufweisen und ist an die Größe des Körperteils angepasst. In Ausführungsformen befindet die Aussparung an beliebigen Stellen in der anatomischen Nachbildung des Körperteils und ist nicht begrenzt auf gewisse Areale.

In Ausführungsformen, wenn die anatomische Nachbildung des Körperteils als Schädel ausgebildet ist, befindet sich die Aussparung im Bereich der Felsenbeinregion des Schädels. In alternativen Ausführungsformen befindet sich die Aussparung im Bereich der Nasenbeinregion des Schädels. In weiteren alternativen Ausführungsformen befindet sich die Aussparung im Bereich der Schädeldecke.

In weiteren Ausführungsformen, wenn die anatomische Nachbildung des Körperteils als Arm, bevorzugt als Unterarm ausgebildet ist, befindet sich eine Aussparung im Bereich der speichenseitigen und ellenseitigen Arterien.

In weiteren Ausführungsformen, wenn die anatomische Nachbildung des Körperteils als Rückenregion ausgebildet ist, befindet sich die Aussparung im Bereich der Wirbelsäule. Dabei kann entweder die ganze Wirbelsäule dargestellt sein oder nur ein Abschnitt wie beispielsweise die Hals-, Brust- oder Lendenwirbelsäule.

Erfindungsgemäß umfasst das System eine anatomische Nachbildung einer austauschbaren Übungsregion, im Folgenden austauschbare Übungsregion genannt

Erfindungsgemäß ist die austauschbare Übungsregion in die Aussparung der anatomischen Nachbildung des Körperteils einsetzbar ausgebildet. In einer Ausführungsform ist die austauschbare Übungsregion so gestaltet, dass sie formschlüssig in die Aussparung der anatomischen Nachbildung des Körperteils einsetzbar ist.

In weiteren Ausführungsformen ist die austauschbare Übungsregion in die Aussparung der anatomischen Nachbildung des Körperteils formschlüssig lösbar ausgebildet. In einer Ausführungsform wird die austauschbare Übungsregion mechanisch mit der anatomischen Nachbildung des Körperteils verbunden.

In Ausführungsformen ist die Aussparung der anatomischen Nachbildung des Körperteils an die Größe der einsetzbaren austauschbaren Übungsregion angepasst. Dabei entspricht die Aussparung in der anatomischen Nachbildung des Körperteils einem Raum, in welchen zumindest ein Teil der austauschbaren Übungsregion einsetzbar ist. In einer Ausführungsform ist die austauschbare Übungsregion lösbar mit der anatomischen Nachbildung des Körperteils verbunden.

Unter "austauschbare Übungsregion" wird dabei eine anatomische Nachbildung einer Körperregion, welche anatomisch topographisch sowie funktionell der entsprechenden definierten anatomischen Nachbildung des Körperteils zugeordnet wird, verstanden. Dabei ist die Übungsregion austauschbar ausgebildet. In einer Ausführungsform ist jede Körperregion eines Menschen oder Tieres als austauschbare Übungsregion darstellbar.

In Ausführungsformen ist die austauschbare Übungsregion als Felsenbein, insbesondere als präzise anatomische Nachbildung der menschlichen Felsenbeinregion, welche in einen Schädel einsetzbar ist, ausgestaltet. In weiteren Ausführungsformen ist die austauschbare Übungsregion als präzise anatomische Nachbildung der Nasenbeinregion, welche in einen Schädel einsetzbar ist, ausgestaltet.

In einer bevorzugten Ausführungsform ist die austauschbare Übungsregion als präzise anatomische Nachbildung eines Armsegmentes, in einer besonders bevorzugten Ausführungsform eines Unterarmsegmentes, welches in die Aussparung im Bereich der speichenseitigen und ellenseitigen Arterien einsetzbar ist, ausgestaltet.

In einer alternativen Ausführungsform ist die austauschbare Übungsregion als präzise anatomische Nachbildung eines Wirbelsäulensegmentes, welches in die Aussparung der Rückenregion einsetzbar ist, ausgestaltet. Dabei kann entweder die komplette Wirbelsäule dargestellt sein oder nur ein Abschnitt wie beispielsweise die Hals-, Brust- oder Lendenwirbelsäule.

Die Art der Ausgestaltung der austauschbaren Übungsregion basiert auf diversen Faktoren wie beispielsweise dem nachempfundenen Alter des Patienten und/oder der entsprechenden Anatomie.

Die Größe der austauschbaren Übungsregion eines Menschen bezieht sich im Sinne der Erfindung auf jede Größe der austauschbaren Übungsregion, die ein Mensch, egal ob männlich oder weiblich, im Laufe seines Lebens annehmen kann. In einer Ausführungsform bezieht sich die Größe der austauschbaren Übungsregion auf die nachgebildete realistische Anatomie eines durchschnittlichen erwachsenen Mannes oder einer durchschnittlichen erwachsenen Frau. In einer weiteren Ausgestaltung der Erfindung bezieht sich die Größe der austauschbaren Übungsregion auf die nachgebildete realistische Anatomie eines Kindes, und entspricht dabei der Größe der Anatomie des jeweiligen kindlichen Alters. Die Größe der austauschbaren Übungsregion eines Tieres bezeichnet im Sinne der Erfindung jede Größe der austauschbaren Übungsregion, die ein Tier, egal ob männlich oderweiblich, im Laufe des Lebens aufweisen kann. In einer alternativen Ausgestaltung der Erfindung ist die Größe der austauschbaren Übungsregion kleiner oder größer als die nachgebildete realistische Anatomie bei einem Menschen oder bei einem Tier.

Weiterhin basiert die Art der Ausgestaltung der austauschbaren Übungsregion auf dem Krankheitsverlauf und/oder dem Krankheitsstadium des zu untersuchenden Patienten.

Erfindungsgemäß weist die austauschbare Übungsregion eine Vorderseite auf. In Ausführungsformen stellt die Vorderseite der austauschbaren Übungsregion eine Fläche dar, welche nach außen zeigt und freiliegend ist. Im Sinne der Erfindung ist mit "außen" die Umgebung des Systems gemeint, von welcher der Benutzer freien Zugriff auf die Übungsregion hat. Erfindungsgemäß ist die Vorderseite der austauschbaren Übungsregion von außen für den Benutzer zugänglich, d.h. operative Instrumente und/oder Implantate werden durch die Vorderseite in die austauschbare Übungsregion eingeführt. Die Vorderseite der austauschbaren Übungsregion stellt somit den Zugangsbereich für den Benutzer während des Trainings dar.

In einer Ausführungsform erfolgt vor dem Einführen von operativen Instrumenten und/oder von Implantaten eine Öffnung der austauschbaren Übungsregion durch ein chirurgisches Verfahren mittels operativer Instrumente. Vorteilhaft wird damit auch das Öffnen der austauschbaren Übungsregion vor beispielsweise dem Einbringen eines Implantates trainiert.

Erfindungsgemäß weist die austauschbare Übungsregion eine Rückseite auf.

In Ausführungsformen stellt die Rückseite der austauschbaren Übungsregion eine Fläche dar, welche nach innen gerichtet, d.h. zur anatomischen Nachbildung des Körperteils, weist und von außen für den Benutzer nicht zugänglich ist.

In einer Ausführungsform befindet sich die Rückseite der austauschbaren Übungsregion zumindest teilweise in körperlichem Kontakt mit der anatomischen Nachbildung des Körperteils. Unter körperlichem Kontakt wird erfindungsgemäß eine formschlüssige Verbindung verstanden. In Ausführungsformen befindet sich die Rückseite der austauschbaren Übungsregion zumindest teilweise in körperlichem Kontakt mit der Aussparung der anatomischen Nachbildung des Körperteils.

Erfindungsgemäß ist die Rückseite der austauschbaren Übungsregion zumindest teilweise formschlüssig mit der Aussparung der anatomischen Nachbildung des Körperteils verbunden. In einer Ausführungsform befindet sich die Rückseite der austauschbaren Übungsregion in körperlichem Kontakt mit der Aussparung der anatomischen Nachbildung des Körperteils

In Ausführungsformen steht die Rückseite der austauschbaren Übungsregion zumindest teilweise in körperlichem Kontakt mit der anatomischen Nachbildung des Körperteils. In weiteren Ausführungsformen ist die Rückseite der austauschbaren Übungsregion von außen für den Benutzer nicht zugänglich.

Weiterhin wird die anatomische Nachbildung einer austauschbaren Übungsregion an sich beansprucht. In einer bevorzugten Ausführungsform umfasst die anatomische Nachbildung einer austauschbaren Übungsregion anatomisch nachgebildete Bestandteile umfassend mindestens ein künstliches Blutgefäß und optional Nervengewebe und/oder einen Hautüberzug, welche in oder an der austauschbaren Übungsregion angeordnet sind.

Erfindungsgemäß umfasst die austauschbare Übungsregion anatomisch nachgebildete Bestandteile umfassend mindestens ein künstliches Blutgefäß. Weiterhin erfindungsgemäß sind die anatomisch nachgebildeten Bestandteile in oder an der austauschbaren Übungsregion angeordnet.

Dabei handelt es sich um künstliche Blutgefäße in jeder denkbaren anatomischen Nachbildung eines Körperteils wie beispielsweise der Felsenbein-, Nasenbein- oder Unterarmregion.

In einer Ausführungsform sind die anatomisch nachgebildeten Bestandteile der austauschbaren Übungsregion zumindest teilweise transparent ausgebildet. Vorteilhaft kann der Benutzer dann die dort ablaufenden Prozesse besser beobachten. In einer alternativen Ausführungsform sind die anatomisch nachgebildeten Bestandteile der austauschbaren Übungsregion zumindest teilweise realistisch und somit nicht transparent ausgebildet. Vorteilhaft wird dem Benutzer dadurch eine realistischer wirkende Trainingssituation vermittelt.

In Ausführungsformen sind die anatomisch nachgebildeten Bestandteile der austauschbaren Übungsregion haptischer und/oder optisch durch den Benutzer des erfindungsgemäßen Systems gut wahrnehmbar.

In Ausführungsformen sind die anatomisch nachgebildeten Bestandteile der austauschbaren Übungsregion zumindest teilweise steril ausgebildet.

In einer Ausführungsform ist der anatomisch nachgebildete Bestandteil der austauschbaren Übungsregion als anatomische Nachbildung von menschlichem oder tierischen Gefäßen ausgebildet. In Ausführungsformen ist das mindestens eine künstliche Gefäß als anatomische Nachbildung von menschlichen oder tierischen Gefäßen ausgebildet und wird auch als künstliches Blutgefäß bezeichnet In weiteren Ausführungsformen ist das mindestens eine künstliche Blutgefäß als anatomische Nachbildung von Gefäßen eines Erwachsenen oder Kindes ausgebildet. Dabei ist das mindestens eine künstliche Blutgefäß als Arterie, Vene oder Kapillare ausgebildet. In einer weiteren Ausführungsform weisen die anatomisch nachgebildeten Bestandteile der austauschbaren Übungsregion mehr als ein künstliches Blutgefäß, bevorzugt ein Geflecht aus künstlichen Blutgefäßen auf. Vorteilhaft kann der Benutzer das mindestens eine künstliche Blutgefäß neben dessen haptischer Beschaffenheit auch optisch gut wahrnehmen.

In Ausführungsformen ist das als anatomisch nachgebildeter Bestandteil ausgebildete mindestens eine künstliche Blutgefäß als Teil des Flüssigkeitskreislaufes zu betrachten, sodass im Folgenden bei Schritten, die den Flüssigkeitskreislauf betreffen, auch die anatomisch nachgebildeten Bestandteile umfassend das mindestens eine künstliche Blutgefäß eingeschlossen sind.

In einer weiteren Ausführungsform umfassen die anatomisch nachgebildeten Bestandteile der austauschbaren Übungsregion neben künstlichen Blutgefäßen auch noch andere anatomische Nachbildungen von Gefäßen wie beispielsweise künstliche Lymphgefäße, wobei die künstlichen Lymphgefäße als Lymphkapillaren, Kollektoren oder Lymphsammelstämme ausgebildet sind Im Folgenden beziehen sich alle aufgeführten Spezifikationen der künstlichen Blutgefäße auch auf alle Gefäßtypen einschließlich der künstlichen Lymphgefäße.

In Ausführungsformen ist das mindestens eine künstliche Blutgefäß als flexible Hohlröhre ausgebildet.

In einer Ausführungsform ist das mindestens eine künstliche Blutgefäß zumindest teilweise transparent ausgebildet. Vorteilhaft wird damit eine gute Einsicht für den Benutzer sowie eine gute Darstellbarkeit für das optoelektronische Detektionsmittel gewährleistet. In einer weiteren Ausführungsform weist das mindestens eine künstliche Blutgefäß variable Innen- und Außendurchmesser auf.

In Ausführungsformen befindet sich das mindestens eine künstliche Blutgefäß zumindest teilweise in körperlichem Kontakt mit der austauschbaren Übungsregion und/oder mit der anatomischen Nachbildung des Körperteils.

In einer Ausführungsform weist das mindestens eine künstliche Blutgefäß variable und naturgetreue Stärken und mechanische Eigenschaften auf, sodass ein reales Anstechen, Durchschneiden oder Durchstechen des mindestens einen künstlichen Blutgefäßes beispielsweise durch operative Instrumente und/oder Implantate realisierbar ist. Vorteilhaft sind somit dem Menschen ähnliche Verletzungen simulierbar.

In Ausführungsformen weist das mindestens eine künstliche Blutgefäß die mechanischen Eigenschaften und Wanddicke der menschlichen oder tierischen Gefäße der entsprechenden Körperregion auf und sind in diesen variierbar. Vorteilhaft weist das mindestens eine künstliche Blutgefäß eine entsprechende Festigkeit bzw. einen entsprechenden Widerstand bei gleichzeitiger Flexibilität auf. In einer Ausführungsform ist das mindestens eine künstliche Blutgefäß dehnbar ausgebildet. In einer weiteren Ausführungsform besteht das mindestens eine künstliche Blutgefäß zumindest teilweise aus einem elastischen Kunststoff, bevorzugt aus einem elastischen medizinischen Kunststoff. Vorteilhaft ist der elastische Kunststoff des mindestens einen künstlichen Blutgefäßes derart ausgebildet, dass er ein hohes Rückstellvermögen aufweist, wodurch er sich nach einer Verformung wieder seiner Ausgangsform annähern kann. In weiteren Ausführungsformen ist das Material des mindestens einen künstlichen Blutgefäßes selbstdichtend ausgestaltet.

In Ausführungsformen ist der anatomisch nachgebildete Bestandteil der austauschbaren Übungsregion als anatomische Nachbildung von menschlichem oder tierischem Nervengewebe ausgebildet.

In weiteren Ausführungsformen ist der anatomisch nachgebildete Bestandteil der austauschbaren Übungsregion als Kombination einer anatomischen Nachbildung von menschlichen oder tierischen Gefäßen und menschlichem oder tierischem Nervengewebe ausgebildet.

Vorteilhaft ist das Nervengewebe derart ausgebildet, dass es ein hohes Rückstellvermögen aufweist, wodurch es sich nach einer Verformung wieder seiner Ausgangsform annähern kann.

In einer bevorzugten Ausführungsform ist der anatomisch nachgebildete Bestandteil der austauschbaren Übungsregion als anatomisch nachgebildeter Hautüberzug ausgestaltet. Der Hautüberzug entspricht dabei einem Hautimitat. In Ausführungsformen entspricht der Hautüberzug der äußersten Schicht zumindest der Vorderseite der austauschbaren Übungsregion.

In einer bevorzugten Ausführungsform ist der anatomisch nachgebildete Hautüberzug zumindest teilweise auf der austauschbaren Übungsregion angeordnet. In einer alternativen Ausführungsform ist der anatomisch nachgebildete Hautüberzug zumindest teilweise auf der anatomischen Nachbildung des Körperteils angeordnet. In einer weiteren alternativen Ausführungsform ist der anatomisch nachgebildete Hautüberzug zumindest teilweise auf der anatomischen Nachbildung des Körperteils und/oder der austauschbaren Übungsregion angeordnet.

In einer bevorzugten Ausführungsform besteht der anatomisch nachgebildete Hautüberzug zumindest teilweise aus elastischem Kunststoff. In einer Ausführungsform ist der Hautüberzug transparent ausgebildet.

In einer weiteren bevorzugten Ausführungsform weist der anatomisch nachgebildete Hautüberzug ein hohes Rückstellvermögen auf. Vorteilhaft nähert sich der Hautüberzug so nach einer Verformung wieder seiner Ausgangsform an.

In Ausführungsformen weist der Hautüberzug die mechanischen Eigenschaften und Schichtdicke der menschlichen oder tierischen Haut der entsprechenden Körperregion auf und ist in diesen variierbar. Vorteilhaft weist der Hautüberzug eine entsprechende Festigkeit bzw. einen entsprechenden Widerstand bei gleichzeitiger Flexibilität auf, sodass ein realistisches Erfühlen und Ertasten der darunter befindlichen anatomisch nachgebildeten Bestandteilen der austauschbaren Übungsregion erfolgt.

In einer weiteren bevorzugten Ausführungsform realisiert der anatomisch nachgebildete Hautüberzug eine haptische Wahrnehmung des darunterliegenden mindestens einen künstlichen Blutgefäßes. Vorteilhaft können dadurch Punktionen und Palpationen an der austauschbaren Übungsregion vorgenommen werden. In Ausführungsformen weist der Hautüberzug unterschiedliche und naturgetreue Stärken und mechanische Eigenschaften auf, sodass ein reales Durchschneiden oder Durchstechen des Hautüberzugs, beispielsweise durch operative Instrumente und/oder Implantate, erfolgen kann.

In einer bevorzugten Ausführungsform sammelt sich die aus dem mindestens einen künstlichen Blutgefäß austretende Flüssigkeit unter dem Hautüberzug und ist als Nachbildung eines Aneurysmas oder Hämatoms ertastbar.

In einer Ausführungsform liegen die anatomisch nachgebildeten Bestandteile der austauschbaren Übungsregion einzeln oder in Kombination vor. So können die die anatomisch nachgebildeten Bestandteile der austauschbaren Übungsregion mindestens ein künstliches Blutgefäß und optional anatomisch nachgebildetes Nervengewebe und/oder einen anatomisch nachgebildeten Hautüberzug umfassen, wobei erfindungsgemäß das mindestens eine künstliche Blutgefäß in allen Ausgestaltungen vorhanden ist.

In Ausführungsformen weist das Trainingsmodell zumindest teilweise eine anatomische Nachbildung von Muskeln und/oder Fettgewebe auf. In Ausführungsformen sind die Muskeln und/oder das Fettgewebe zumindest teilweise unter dem Hautüberzug angeordnet. In Ausführungsformen sind die Muskeln und/oder das Fettgewebe transparent ausgebildet.

Als Risikostruktur werden im Sinne der Erfindung jene Komponenten bezeichnet, welche während des Trainings berührt oder verletzt bzw. beschädigt werden können. In einer Ausführungsform sollten diese durch die Risikostruktur abgedeckten anatomischen Bereiche im Einsatz am lebenden Patienten und somit in der Realität nicht beschädigt oder verletzt werden.

In Ausführungsformen umfassen die Risikostrukturen des Trainingsmodells zumindest teilweise Bereiche der austauschbaren Übungsregion des Trainingsmodells. In bevorzugten Ausführungsformen umfassen die Risikostrukturen des Trainingsmodells die anatomisch nachgebildeten Bestandteile der austauschbaren Übungsregion somit das mindestens eine künstliche Blutgefäß und optional anatomisch nachgebildetes Nervengewebe und/oder einen anatomisch nachgebildeten Hautüberzug. In alternativen Ausführungsformen umfassen die Risikostrukturen des Trainingsmodells Bereiche der anatomischen Nachbildung des Körperteils und/oder der austauschbaren Übungsregion des Trainingsmodells.

In Ausführungsformen sind die zu untersuchenden Risikostrukturen und/oder der die Risikostrukturen umgebende anatomische Raum zumindest teilweise transparent ausgebildet. Vorteilhaft kann der Benutzer dann die dort ablaufenden Prozesse besser beobachten und eine gute Darstellbarkeit der Prozesse wird gewährleistet, welche beispielsweise durch das optoelektronische Detektionsmittel gut aufnehmbar sind. In Ausführungsformen werden als transparentes Material beispielsweise Kunststoffe wie Polyamide oder Polyurethane oder Silikone verwendet. In alternativen Ausführungsformen sind die Risikostrukturen zumindest teilweise realistisch und somit nicht transparent ausgebildet. Vorteilhaft wird dem Benutzer dadurch eine realistischer wirkende Trainingssituation vermittelt.

Erfindungsgemäß umfasst das System einen Flüssigkeitskreislauf. Dabei weist der Flüssigkeitskreislauf mindestens ein Flüssigkeitsreservoir, mindestens eine Pumpeneinheit und ein Schlauchsystem auf. In einer Ausführungsform stellt der Flüssigkeitskreislauf eine Imitation des menschlichen Blutkreislaufes bzw. des menschlichen Herz-Kreislauf-Systems und somit physiologischer Vorgänge im menschlichen Körper dar. Erfindungsgemäß wird die Flüssigkeit in dem Flüssigkeitskreislauf durch mindestens eine Pumpe und eine Steuereinheit der Pumpeneinheit befördert.

In Ausführungsformen entspricht das Volumen an im Flüssigkeitskreislauf befindlicher Flüssigkeit dem realen Blutvolumen und somit der Gesamtblutmenge im menschlichen oder tierischen Körper. In weiteren Ausführungsformen entspricht das Volumen an im Flüssigkeitskreislauf befindlicher Flüssigkeit dem realen Blutvolumen und somit der Gesamtblutmenge im Körper eines Erwachsenen oder Kindes.

In einer Ausführungsform ist das Flüssigkeitsreservoir direkt an der Pumpeneinheit angeordnet und lösbar mit dieser verbunden. In einer weiteren Ausführungsform ist das Flüssigkeitsreservoir auf der Pumpeneinheit aufgesetzt, sodass Flüssigkeit von oben in die mindestens eine Pumpe der Pumpeneinheit geleitet wird.

In Ausführungsformen ist die Flüssigkeit eine Imitation einer Körperflüssigkeit. In Ausführungsformen entspricht die Flüssigkeit Blut. In alternativen Ausführungsformen entspricht die Flüssigkeit Lymphe.

In einer Ausführungsform ist die Flüssigkeit in dem mindestens einen Flüssigkeitsreservoir enthalten. Dabei wird die dort enthaltene Flüssigkeit über die mindestens eine Pumpe der Pumpeneinheit durch den Flüssigkeitskreislauf befördert. Somit wird die Flüssigkeit durch das mindestens eine künstliche Blutgefäß, durch das Schlauchsystem und durch die mindestens eine Pumpeneinheit befördert.

Erfindungsgemäß enthält das Flüssigkeitsreservoir eine Flüssigkeit.

In Ausführungsformen ist das Flüssigkeitsreservoir als Tank oder Speicher ausgestaltet. In alternativen Ausführungsformen ist das Flüssigkeitsreservoir anatomisch ausgebildet. In einer weiteren Ausführungsform entspricht das Flüssigkeitsreservoir der anatomischen Nachbildung des Körperteils oder anatomischen Nachbildung der austauschbaren Übungsregion.

In einer Ausführungsform ist das Flüssigkeitsreservoir über mindestens eine selbstverschließende Schnellkupplung mit der Pumpeneinheit verbunden. Vorteilhaft erfolgt somit ein schnelles Aufstecken oder Entnahme des Flüssigkeitsreservoirs, beispielsweise zum Befüllen mit Flüssigkeit. In einer alternativen Ausführungsform ist das Flüssigkeitsreservoir über einen als zweiten Vorlauf ausgebildeten zweiten Schlauch und einen als zweiten Rücklauf ausgebildeten zweiten Schlauch lösbar mit mindestens einer Pumpe der Pumpeneinheit verbunden. Dabei kann das Flüssigkeitsreservoir eine beliebige Entfernung zur Pumpeneinheit aufweisen. Dabei weisen zweiter Vorlauf und zweiter Rücklauf die gleiche Funktion wie erster Vorlauf und erster Rücklauf auf.

Die Flüssigkeit aus dem Flüssigkeitsreservoir wird durch die mindestens eine Pumpe der Pumpeneinheit durch das Schlauchsystem und das mindestens eine künstliche Blutgefäß befördert.

Vorteilhaft, im Falle von Interaktion des Benutzers mit dem System, wird durch das Flüssigkeitsreservoir gewährleistet, dass Flüssigkeit aus diesem nachgeliefert wird - so lange, bis die im Flüssigkeitsreservoir enthaltene Flüssigkeit verbraucht ist. Vorteilhaft wird damit ein starker Blutverlust durch Volumenmangel bzw. ein Verbluten des Patienten simuliert.

In einer Ausführungsform enthält das Flüssigkeitsreservoir ein Flüssigkeitsvolumen im Bereich von 0 I bis 10 I, bevorzugt von 4 I bis 7 I, ganz bevorzugt von 4,5 I bis 6 I. Vorteilhaft ist das Flüssigkeitsvolumen so ausreichend, um einen Blutverlust zu simulieren, wobei die Menge der aus dem mindestens einen künstlichen Blutgefäß austretenden Flüssigkeit im Falle einer Interaktion oder Verletzung durch den Benutzer in einem Bereich liegt, welcher starken Blutverlust bis hin zu Blutverlust mit tödlichen Folgen simuliert. Das Volumen der aus dem mindestens einen künstlichen Blutgefäß austretenden Flüssigkeit liegt daher bevorzugt bei maximal ca. 2 I.

Erfindungsgemäß weist die Pumpeneinheit mindestens eine Pumpe, zur Beförderung der Flüssigkeit in dem Flüssigkeitskreislauf sowie zur Simulation des Blutflusses und des Pulses, und eine Steuereinheit auf.

Erfindungsgemäß dient die mindestens eine Pumpeneinheit zur Erzeugung eines des menschlichen Herz-Kreislauf-Systems nachempfundenen Herzschlages und Pulses in dem mindestens einen künstlichen Blutgefäß der austauschbaren Übungsregion des Trainingsmodells.

Weiterhin wird die Pumpeneinheit zur Erzeugung eines des menschlichen Herz-Kreislauf-Systems nachempfundenen Herzschlages und Pulses in mindestens einem künstlichen Blutgefäß an sich beansprucht, wobei die Pumpeneinheit mindestens eine Pumpe und eine Steuereinheit aufweist, wobei die mindestens eine Pumpe als Spiralpumpe, Kreiselpumpe, Membranpumpe, Rollenpumpe, Schüttelpumpe, Wasserpumpe oder Kettenpumpe ausgebildet ist.

In einer Ausführungsform ist die mindestens eine Pumpeneinheit modular aufgebaut und umfasst als Module mindestens eine Pumpe und einer Steuereinheit. In weiteren Ausführungsformen sind die einzelnen Module der mindestens einen Pumpeneinheit austauschbar, je nach Bedarf und Anwendungsfall oder im Falle von Reparaturen. Vorteilhaft können verschiedene Szenarien flexibel durchgeführt werden, ohne die komplette Pumpeneinheit auszuwechseln. So kann schnell und benutzerfreundlich eine Pumpe der Pumpeneinheit hinzugefügt oder entnommen werden.

Bevorzugt umfasst die mindestens eine Pumpeneinheit mindestens eine Pumpe, auch Blutpumpe genannt. In einer bevorzugten Ausführungsform ist die mindestens eine Pumpe als Flüssigkeitspumpe ausgebildet. Dazu ist die mindestens eine Flüssigkeitspumpe periodisch arbeitend zur Beförderung von Flüssigkeiten in dem Flüssigkeitskreislauf ausgestaltet. Vorteilhaft kann damit eine Zirkulation der Flüssigkeit im Flüssigkeitskreislauf realisiert werden.

In Ausführungsformen dient die mindestens eine Pumpe der Entlüftung der Schläuche des Schlauchsystems und der anatomisch nachgebildeten Bestandteile vor Messbeginn und/oder der Belüftung der Schläuche des Schlauchsystems und der anatomisch nachgebildeten Bestandteile, insbesondere des mindestens einen künstlichen Blutgefäßes, nach der Messung In weiteren Ausführungsformen dient die mindestens eine Pumpe dem Befüllen der Schläuche des Schlauchsystems und der anatomisch nachgebildeten Bestandteile, insbesondere des mindestens einen künstlichen Blutgefäßes, vor Messbeginn. In weiteren Ausführungsformen dient die mindestens eine Pumpe der Simulation des Blutflusses und des Pulses im erfindungsgemäßen System, speziell in den anatomisch nachgebildeten Bestandteilen

In Ausführungsformen erfolgt durch die Veränderung der Spannungs-, Strom- oder Frequenzversorgung der mindestens einen Pumpe zu einer Veränderung von Fördermenge oder Druck der Flüssigkeit im Flüssigkeitskreislauf und den anatomisch nachgebildeten Bestandteilen. Je nach Pumpenart bewirkt eine Erhöhung oder Absenkung der Spannung, des Stromes oder der Frequenz eine Drehzahländerung der Pumpe. Im Folgenden ist trifft dies daher je nach Pumpenart zu differenzieren. In Ausführungsformen führt eine Drehzahländerung der mindestens einen Pumpe zu einer Veränderung von Fördermenge oder Druck der Flüssigkeit im Flüssigkeitskreislauf und den anatomisch nachgebildeten Bestandteilen. Dabei entspricht die Fördermenge dem Volumenstrom und somit dem Blutfluss der durch den Flüssigkeitskreislauf und den anatomisch nachgebildeten Bestandteilen beförderten Flüssigkeit. Der Druck der Flüssigkeit, welcher erhöht oder erniedrigt einstellbar ist, wiederum entspricht dem simulierten Puls, wodurch sich eine Pulskurve oder Blutdruckkurve generieren lässt. Durch die Strom-, Spannungs-, oder Frequenzänderung und die damit einhergehende Drehzahländerung der mindestens einen Pumpe wird vorteilhaft die Menge der beförderten Flüssigkeitsmenge sowie die Intensität des Druckes der Flüssigkeit geregelt und gesteuert.

In einer bevorzugten Ausführungsform ist die mindestens eine Pumpe der Pumpeneinheit als Spiralpumpe, Kreiselpumpe, Membranpumpe, Rollenpumpe, Schüttelpumpe, Wasserpumpe oder Kettenpumpe ausgebildet. In einer weiteren Ausführungsform, bei mehr als einer Pumpe, sind die Pumpen unabhängig ausgewählt aus einer Spiralpumpe, Kreiselpumpe, Membranpumpe, Rollenpumpe, Schüttelpumpe, Wasserpumpe oder Kettenpumpe. Dabei ist die mindestens eine Pumpe allerdings nicht beschränkt auf diese Pumpenarten.

In Ausführungsformen umfasst die mindestens eine Pumpeneinheit mindestens zwei Pumpen, bevorzugt zwei Pumpen. In einer Ausführungsform ist eine erste Pumpe der mindestens zwei Pumpen als Pumpe wie beispielsweise Membranpumpe zur Belüftung und/oder Entlüftung des Flüssigkeitskreislaufes nach und/oder vor der Messung ausgebildet. In einer Ausführungsform ist die erste Pumpe dabei zur Beförderung von Flüssigkeiten und Gasen ausgebildet. Dabei werden insbesondere die Schläuche des Schlauchsystems und das mindestens eine künstliche Blutgefäß belüftet und/oder entlüftet. Das Gas hierzu ist bevorzugt Luft, kann aber auch inert ausgebildet sein. Jeweils nach dem Belüften und/oder Entlüften wird der Flüssigkeitskreislauf gasdicht verschlossen. Anschließend erfolgt durch diese erste Pumpe die Befüllung des Flüssigkeitskreislaufes, insbesondere der Schläuche des Schlauchsystems, und der anatomisch nachgebildeten Bestandteile, insbesondere des mindestens einen künstlichen Blutgefäßes, mit Flüssigkeit aus dem Flüssigkeitsreservoir. Dabei ist die erste Pumpe leistungsstark ausgebildet. Die zweite Pumpe der mindestens zwei Pumpen ist beispielsweise als Kreiselpumpe oder Rollenpumpe ausgebildet und dient der Beförderung der Flüssigkeit im Flüssigkeitskreislauf und der anatomisch nachgebildeten Bestandteile sowie der Simulation des Blutflusses und des Pulses in diesen Komponenten. In einer alternativen Ausführungsform ist die zweite Pumpe zur Beförderung von Flüssigkeiten und Gasen ausgebildet.

In einer weiteren bevorzugten Ausführungsform umfasst die mindestens eine Pumpeneinheit mindestens drei Pumpen. In einer Ausführungsform ist eine erste Pumpe der mindestens drei Pumpen als Pumpe wie beispielsweise Membranpumpe zur Belüftung und/oder Entlüftung des Flüssigkeitskreislaufes nach und/oder vor der Messung ausgebildet. Jeweils nach dem Belüften und/oder Entlüften wird der Flüssigkeitskreislauf gasdicht verschlossen. Anschließend erfolgt durch diese erste Pumpe die Befüllung des Flüssigkeitskreislaufes, insbesondere der Schläuche des Schlauchsystems, und der anatomisch nachgebildeten Bestandteile, insbesondere des mindestens einen künstlichen Blutgefäßes, mit Flüssigkeit aus dem Flüssigkeitsreservoir. Dabei ist die erste Pumpe leistungsstark ausgebildet. Die zweite und dritte Pumpe der mindestens drei Pumpen sind beispielsweise als Kreiselpumpen und/oder Rollenpumpen ausgebildet und dienen der Beförderung der Flüssigkeit im Flüssigkeitskreislauf und der anatomisch nachgebildeten Bestandteile sowie der Simulation des Blutflusses und des Pulses in diesen Komponenten In einer alternativen Ausführungsform dient die zweite Pumpe der kontinuierlichen Beförderung der Flüssigkeit und die dritte Pumpe dient der Simulation. Vorteilhaft werden dabei die Reaktionen unabhängig voneinander durchgeführt und sind weniger anfällig für Störungen. Weiterhin vorteilhaft wird durch drei Pumpen eine filigranere bzw. akkuratere Abstimmung, Messung und Gestaltung der simulierten Blutflüsse ermöglicht. In einer weiteren alternativen Ausführungsform dient die erste Pumpe der Befüllung des Flüssigkeitskreislaufes und der anatomisch nachgebildeten Bestandteile mit Flüssigkeit, die zweite Pumpe dient der kontinuierlichen Beförderung der Flüssigkeit und die dritte Pumpe dient der Simulation. In einer Ausführungsform ist, im Falle von mindestens drei Pumpen, mindestens die erste, zweite oder dritte Pumpe zur Beförderung von Flüssigkeiten und Gasen ausgebildet.

In einer Ausführungsform sind die Pumpen in Reihe geschaltet oder miteinander durch Verbindungsstücke, beispielsweise T-Stücke, verbunden.

In einer alternativen Ausführungsform können, im Falle mehrerer an den Simulationsprozessen beteiligter Pumpen, diese Pumpen auch von unterschiedlichen Pumpeneinheiten stammen

In weiteren Ausführungsformen erfolgt direkt in der mindestens einen Pumpe eine Fehlerüberwachung. Unter die Überwachung fallen auch Fehler des Computerprogrammprodukts sowie Ablauffehler, beispielsweise wenn keine Kalibrierung erfolgt ist oder eine Belüftung und/oder Entlüftung des Systems fehlgeschlagen ist.

In Ausführungsform ist die mindestens eine Pumpe neben der Beförderung von Flüssigkeiten und Gasen zusätzlich als Sensor ausgebildet. Dabei wäre die mindestens eine Pumpe derart ausgebildet, um ihren Strom, Spannung, Frequenz und/oder Drehzahl selbst auszulesen. Vorteilhaft könnten dadurch direkt Rückschlüsse auf die eingetretenen Ereignisse im erfindungsgemäßen System zu ziehen, beispielsweise im Falle eines Druckabfalls.

Bevorzugt umfasst die mindestens eine Pumpeneinheit mindestens eine Steuereinheit.

In einer Ausführungsform empfängt die Steuereinheit elektrische Signale von der mindestens einen Detektionsvorrichtung.

In Ausführungsformen dient die Steuereinheit der Steuerung und Regelung der Fördermenge oder des Druckes der Flüssigkeit im Flüssigkeitskreislauf. Vorteilhaft wird durch die Steuereinheit somit der Blutkreislauf simuliert. In einer weiteren Ausführungsform empfängt erst die Steuereinheit elektrische Signale von mindestens einer Detektionsvorrichtung und/oder den Sensoren und überträgt diese als rückgekoppelte elektrische Signale durch die Mittel zur Signalübertragung an die elektronische Steuer-, Mess- und Auswerteeinheit. Die elektronische Steuer-, Mess- und Auswerteeinheit wiederum übermittelt ein szenarioabhängiges Steuersignal an die Steuereinheit.

In einer bevorzugten Ausführungsform sendet die Steuereinheit der Pumpeneinheit ein rückgekoppeltes Steuersignal an die elektronische Steuer-, Mess- und Auswerteeinheit. Dabei überträgt die Steuereinheit die empfangenen Daten von der Detektionsvorrichtung und/oder den Sensoren durch ihre durch die Mittel zur Signalübertragung realisierte Verbindung als elektrische Signale an die elektronische Steuer-, Mess- und Auswerteeinheit, wobei die elektronische Steuer-, Mess- und Auswerteeinheit darauf basierend wiederum die Steuereinheit der Pumpeneinheit steuert und regelt und somit vorteilhaft eine Überwachung der Fördermenge oder des Druckes der Flüssigkeit im Flüssigkeitskreislauf und somit auch die Überwachung des simulierten Blutflusses und Pulses im Trainingsmodell gewährleistet wird. Indem die elektronische Steuer-, Mess- und Auswerteeinheit ein szenarioabhängiges Steuersignal an die Steuereinheit übermittelt, reagiert die Steuereinheit vorteilhaft flexibel und in Echtzeit auf das jeweilige Szenario.

In einer bevorzugten Ausführungsform wird durch das rückgekoppelte elektrische Signal der Trainingsverlauf sowie die Pulskurve und die Fördermenge im Flüssigkeitskreislauf in Echtzeit variiert, überwacht und analysiert.

Erfindungsgemäß umfasst das Schlauchsystem mindestens zwei erste Schläuche. Bevorzugt umfasst das Schlauchsystem zwei erste Schläuche.

Bevorzugt sind die ersten Schläuche zwischen dem Patientenmodell, insbesondere des mindestens einen künstlichen Blutgefäßes der austauschbaren Übungsregion, und dem Pumpeneinheit angeordnet. Erfindungsgemäß sind die einen Enden der mindestens zwei ersten Schläuche jeweils lösbar mit den Enden des mindestens einen künstlichen Blutgefäßes verbunden und die anderen Enden der mindestens zwei ersten Schläuche sind jeweils lösbar mit der mindestens einen Pumpe der Pumpeneinheit verbunden. In Ausführungsformen wird die lösbare Verbindung der Schläuche mit der mindestens einen Pumpe, dem Flüssigkeitsreservoir und den anatomisch nachgebildeten Bestandteilen durch Schlauchverbindungen oder Schlauchkupplungen realisiert.

In Ausführungsformen ist das erste Ende des ersten Vorlaufs mit dem ersten Ende des anatomisch nachgebildeten Bestandteils verbunden. In weiteren Ausführungsformen ist das zweite Ende des ersten Vorlaufs mit der mindestens einen Pumpe verbunden. In Ausführungsformen ist das erste Ende des ersten Rücklaufs mit dem zweiten Ende des anatomisch nachgebildeten Bestandteils verbunden. In weiteren Ausführungsformen ist das zweite Ende des ersten Rücklaufs mit der mindestens einen Pumpe verbunden.

Im Sinne der Erfindung dienen die mindestens zwei ersten Schläuche als erster Vorlauf und erster Rücklauf. Dabei dient der erste Vorlauf des ersten Schlauches zur Beförderung der Flüssigkeit im Flüssigkeitskreislauf in Fließrichtung von der Pumpeneinheit zum Trainingsmodell, insbesondere zum mindestens einen künstlichen Blutgefäßes der austauschbaren Übungsregion. Der erste Rücklauf des ersten Schlauches dient zur Beförderung der Flüssigkeit im Flüssigkeitskreislauf in Fließrichtung vom Trainingsmodell, insbesondere vom mindestens einen künstlichen Blutgefäßes der austauschbaren Übungsregion, zur Pumpeneinheit.

In Ausführungsformen entspricht der als erster Vorlauf ausgebildete erste Schlauch einem arteriellen Zugang und der als erster Rücklauf ausgebildete erste Schlauch einem venösen Zugang.

In Ausführungsformen sind die Schläuche als Kunststoffschläuche, vorteilhafterweise aus gängigen medizinischen Kunststoffmaterialien ausgebildet In alternativen Ausführungsformen weisen die Schläuche des Schlauchsystems die gleichen Eigenschaften wie das mindestens eine künstliche Blutgefäß auf.

In einer bevorzugten Ausführungsform ist der Flüssigkeitskreislauf als geschlossener oder offener Flüssigkeitskreislauf ausgestaltet.

Im Falle eines geschlossenen Flüssigkeitskreislaufes zirkuliert die durch die mindestens eine Pumpe der Pumpeneinheit beförderte Flüssigkeit durch ein geschlossen ausgebildetes Schlauchsystem. Dabei wird die Flüssigkeit kontrolliert und gerichtet in und durch das mindestens eine künstliche Blutgefäß geleitet. Im geschlossenen Flüssigkeitskreislauf findet durch die mindestens eine Pumpe eine regelmäßig wiederkehrende Bewegung der Flüssigkeit innerhalb des Flüssigkeitskreislaufes statt. In einer Ausführungsform wird die Flüssigkeit aus dem Flüssigkeitsreservoir durch die mindestens eine Pumpe der Pumpeneinheit durch den ersten Vorlauf des Schlauchsystems in das eine Ende des mindestens einen künstlichen Blutgefäßes der austauschbaren Übungsregion des Trainingsmodells befördert. Nachdem die Flüssigkeit durch das mindestens eine künstliche Blutgefäß befördert wurde, zirkuliert sie durch den ersten Rücklauf des Schlauchsystems zurück in das Flüssigkeitsreservoir. Dieser Vorgang ist beliebig oft wiederholbar. Somit ist die Flüssigkeit im geschlossenen Flüssigkeitskreislauf dauerhaft dem Flüssigkeitskreislauf zugeführt.

Im Falle eines offen ausgebildeten Flüssigkeitskreislaufes findet keine regelmäßig wiederkehrende Bewegung der Flüssigkeit und somit keine Zirkulation der Flüssigkeit im Flüssigkeitskreislauf statt. Der offene Flüssigkeitskreislauf entspricht daher einem nichtzirkulierenden Flüssigkeitskreislauf. Im Falle eines offenen Flüssigkeitskreislaufes weist das Schlauchsystem und/oder der anatomisch nachgebildete Bestandteil wie beispielsweise das mindestens eine künstliche Blutgefäß mindestens eine Abtrennungsvorrichtung wie beispielsweise ein Ventil auf.

In Ausführungsformen erfolgt die Befüllung der Schläuche des Schlauchsystems und der anatomisch nachgebildeten Bestandteile, insbesondere des mindestens einen künstlichen Blutgefäßes, vor Messbeginn durch die mindestens eine Pumpe erfolgt analog wie beim Befüllen des geschlossenen Flüssigkeitskreislaufes. In einer alternativen Ausführungsform ist der erste Rücklauf des Schlauchsystems nicht mit dem Flüssigkeitsreservoir verbunden, sodass die Flüssigkeit aus dem ersten Rücklauf austritt und in die Auffangschale fließt. In beiden Fällen ist die mindestens eine Abtrennungsvorrichtung dazu geöffnet. Vorteilhaft kann das Gas dadurch aus dem System zum Beispiel in das Flüssigkeitsreservoir oder in die Umgebung entweichen, bis die Schläuche und der anatomisch nachgebildete Bestandteil vollständig mit Flüssigkeit gefüllt sind. Nach dem Befüllen der Schläuche und des mindestens einen künstlichen Blutgefäßes wird, im Falle des offenen Flüssigkeitskreislaufes, im Anschluss die Verbindung von erstem Vorlauf und erstem Rücklauf zum Flüssigkeitsreservoir abgetrennt Die Abtrennung erfolgt durch mindestens eine Abtrennungsvorrichtung.

Vorteilhaft erfolgt durch diese Abtrennung eine besonders realistische Erhöhung und/oder Erniedrigung des Flüssigkeitsdruckes in den Schläuchen des offenen Flüssigkeitskreislaufes, insbesondere im ersten Vorlauf und im ersten Rücklauf, sowie dem mindestens einen künstlichen Blutgefäß und somit eine Simulation des Pulses. Insbesondere kann durch den offenen Flüssigkeitskreislauf ein pulsierendes Blutgefäß simuliert werden.

In einer alternativen Ausführungsform können die Schläuche des Schlauchsystems und der anatomisch nachgebildeten Bestandteile, insbesondere des mindestens einen künstlichen Blutgefäßes, vor Messbeginn durch die mindestens eine Pumpe nur mit Gas belüftet und befüllt werden, sodass in der anschließenden Messung ebenfalls ein Puls simuliert werden kann.

Wird allerdings im offenen Flüssigkeitskreislauf das mindestens eine künstliche Blutgefäß oder die Risikostruktur beschädigt oder verletzt, greifen dieselben Mechanismen wie auch im geschlossenen Flüssigkeitskreislauf, indem Flüssigkeit aus der gebildeten Öffnung austritt und die mindestens eine Pumpe durch die Steuereinheit der Pumpeneinheit entsprechend angesteuert wird.

In einer alternativen Ausführungsform des offenen Kreislaufes weist mindestens ein Schlauch aus dem Schlauchsystem eine Öffnung am Ende auf, durch welche die Flüssigkeit nach außen, d.h. in die Umgebung und somit nicht mehr zurück in den offenen Flüssigkeitskreislauf gelangt. Somit liegt ein ununterbrochener simulierter Blutverlust des Patienten vor, welcher erst durch die Beseitigung der Öffnung gestoppt wird. Vorteilhaft kann dadurch realistisch die Stresssituation des Benutzers bei einem Verbluten des Patienten trainiert werden.

Erfindungsgemäß weist das System mindestens eine Detektionsvorrichtung zur Überwachung der Eingriffe in der austauschbaren Übungsregion auf. Im Sinne der Erfindung ist die mindestens eine Detektionsvorrichtung in oder an den anatomisch nachgebildeten Bestandteilen der austauschbaren Übungsregion angeordnet.

In einer bevorzugten Ausführungsform ist die mindestens eine Detektionsvorrichtung in oder an des als mindestens eines künstlichen Blutgefäßes und/oder anatomisch nachgebildetes Nervengewebe und/oder anatomisch nachgebildeter Hautüberzug ausgebildeten anatomisch nachgebildeten Bestandteiles der austauschbaren Übungsregion angeordnet. Somit ist die mindestens eine Detektionsvorrichtung an den Risikostrukturen angeordnet. Wird also die Risikostruktur berührt oder verletzt, wird gleichzeitig auch die daran angeordnete Detektionsvorrichtung berührt oder verletzt. In alternativen Ausführungsformen ist die Detektionsvorrichtung an der anatomischen Nachbildung des Körperteils und/oder der austauschbaren Übungsregion des Trainingsmodells angeordnet.

In einer bevorzugten Ausführungsform ist die mindestens eine Detektionsvorrichtung als elektrisch leitende Struktur und/oder als lichtleitende Struktur ausgebildet. Betreffen die aufgeführten Spezifikationen im Folgenden sowohl die elektrisch leitende Struktur als auch die lichtleitende Struktur, so wird im Folgenden lediglich der Begriff "Struktur" verwendet. Dabei weisen die Strukturen Eingangskanäle auf, durch welche die Interaktionen mit dem Benutzer erfasst werden und als elektrische Signale an die an die Eingangskanäle angeschlossenen Mittel zur Signalübertragung weitergeleitet werden.

In Ausführungsformen ist die Struktur zumindest teilweise an Bereichen der austauschbaren Übungsregion angeordnet. In bevorzugten Ausführungsformen ist die Struktur an der Innenfläche des mindestens einen künstlichen Blutgefäßes und/oder im oder am anatomisch nachgebildeten Nervengewebe und/oder im oder am anatomisch nachgebildeten Hautüberzug angeordnet.

In einer Ausführungsform ist die Struktur als Gitter oder Geflecht ausgebildet.

In Ausführungsformen ist jede Struktur an einen separaten Eingangskanal angeschlossen, sodass ermittelt und exakt nachverfolgt werden kann, welche Risikostruktur wie berührt oder beschädigt wurde. Überdies kann der Grad der Berührung oder Beschädigung bzw. Verletzung, also die Tiefe der Berührung oder Beschädigung bzw. Verletzung ermittelt und angezeigt werden. Weiterhin dient die Struktur der Erfassung bestimmter Positionen durch die operativen Instrumente.

In einer Ausführungsform wird die Struktur durch Gießverfahren, Spritzverfahren, manuelles Einbringen von Strukturen oder anderen Verfahren hergestellt. In weiteren Ausführungsformen erfolgt durch die Strukturen eine Eindringtiefenbestimmung der operativen Instrumente und/oder der Implantate, wodurch vorteilhaft eine Tiefendetektierung ermöglicht wird. Vorteilhaft wird dadurch eine Blutentnahme oder eine Injektion mittels Kanülen oder Spritzen simuliert.

In Ausführungsformen ist je nach Anwendungszweck die Art und Ausgestaltung der Struktur individuell wählbar.

In einer Ausführungsform werden die elektrisch leitfähigen Strukturen für größere Durchmesser des mindestens einen künstlichen Blutgefäßes oder flächig ausgebildeter Bereiche der austauschbaren Übungsregion verwendet, wohingegen kleinere Durchmesser des mindestens einen künstlichen Blutgefäßes für die lichtleitenden Strukturen verwendet werden.

In Ausführungsformen weist die elektrisch leitfähige Struktur elektrisch leitfähige Materialien wie Metalle, Legierungen, Bleche, Drähte, Folie, Kunststoffe oder Kunststoffschläuche, welche elektrolytische Flüssigkeiten enthält, auf.

In einer Ausführungsform sind die elektrisch leitfähigen Strukturen als elektrischer Stromkreis ausgebildet. In weiteren Ausführungsformen wirken zumindest die Spitzen der operativen Instrumente und/oder die Spitzen der Implantate oder die operativen Instrumente und/oder die Implantate per se als Schalter des elektrischen Stromkreises, wobei durch Berühren oder Beschädigen der elektrisch leitfähigen Struktur durch die Spitzen der operativen Instrumente und/oder die Spitzen der Implantate oder durch die operativen Instrumente und/oder durch die Implantate per se der elektrische Stromkreis geschlossen wird und je nach ermitteltem elektrischen Widerstand ein elektrisches Signal an die Steuereinheit der Pumpeneinheit übermittelt wird.

In Ausführungsformen weist die lichtleitende Struktur lichtleitfähige Materialien wie Lichtleitkabel aus PMMA oder Glasfaserkabel auf. In einer Ausführungsform werden Dioden oder Leuchtmittel als Quelle zur Einkopplung des Lichts in die lichtleitende Struktur verwendet, welche an die lichtleitende Struktur angeschlossen werden.

In Ausführungsformen sind die lichtleitfähigen Strukturen derart ausgebildet, dass sich bei einem Berühren oder Beschädigen derselben die Beleuchtungsstärke der lichtleitfähigen Strukturen verändert. In Ausführungsformen sind die lichtleifähigen Strukturen als Lichtsensoren ausgebildet, welches Licht in eine Spannung, Strom oder Frequenz und somit ein elektrisches Signal umwandeln. Dabei erfasst mindestens einen Lichtsensor, ausgewählt aus einer Photodiode, einer Solarzelle, einem Phototransistor, einem Photowiderstand oder einem integrierten Photosensor, die Beleuchtungsstärke. Vorteilhaft ist die Beleuchtungsstärke von der Eindringtiefe zumindest der Spitze des operativen Instrumentes und/oder der Spitze des Implantates oder von der Eindringtiefe der operativen Instrumente und/oder der Implantate per se abhängig und ermöglicht somit eine Aussage über die Art und Intensität der Berührung oder Beschädigung der Risikostruktur.

In einer bevorzugten Ausführungsform umfasst das erfindungsgemäße System mindestens ein operatives Instrument. In bevorzugten Ausführungsformen umfasst das bereitgestellte operative Instrument verschiedene Werkzeuge aus dem chirurgischen und minimal-chirurgischen Bereich wie beispielsweise Zeigewerkzeug, Bohrer, Kugelstopfer, chirurgische Schere, chirurgische Zange, Sauger oder medizinisches Endoskop. Als operative Instrumente fallen im Sinne der Erfindung aber auch nicht operative Instrument wie Kanülen zur Kanülierung.

Vorteilhaft werden die operativen Instrumente vom Benutzer exakt an der gewünschten und medizinisch erforderlichen Stelle positioniert.

Zumindest die Spitzen der operativen Instrumente oder die operativen Instrumente per se sind derart ausgebildet, um die Risikostrukturen zu berühren oder zu beschädigen bzw. zu verletzen. Unter den Spitzen wird dabei jener Teil der operativen Instrumente verstanden, welcher örtlich und zeitlich zuerst auf der Vorderseite der austauschbaren Übungsregion positioniert wird.

In Ausführungsformen sind die Spitzen der operativen Instrumente oder die operativen Instrumente per se zumindest teilweise elektrisch leitend und/oder lichtleitend ausgebildet. Vorteilhaft dienen diese somit als Schalter des elektrischen Stromkreises, um diesen zu schließen, wenn die Spitzen der operativen Instrumente oder die operativen Instrumente per se die elektrisch leitfähige Struktur der Detektionsvorrichtung berühren.

In einer Ausführungsform wird das oder werden die ausgewählten und medizinisch erforderlichen operativen Instrumente auf der Vorderseite der austauschbaren Übungsregion positioniert und durch diese hindurch zur Rückseite der austauschbaren Übungsregion geführt. Der Durchtritt und die Positionierung der operativen Instrumente an der austauschbaren Übungsregion ist als Einstichstelle im anatomisch nachgebildeten Hautüberzug sichtbar.

In Ausführungsformen enthalten die operativen Instrumente eine Markierung welche sie kennzeichnende Merkmale und Parameter enthält. Vorteilhaft ist die Markierung unterschiedlich gestaltet, sodass die operativen Instrumente unterscheidbar sind. Die Markierung auf den operativen Instrumenten wird von einem Detektionsmittel wie einer Kamera erfasst und an das Computerprogrammprodukt weitergeleitet, wodurch erkannt wird, welche operativen Instrumente beim jeweiligen Training verwendet werden. In Ausführungsformen überwacht das Detektionsmittel zudem den operativen Eingriff auf der Vorderseite der austauschbaren Übungsregion.

In einer Ausführungsform weisen die operativen Instrumente einen Tracker auf, welcher mit der elektronischen Steuer-, Mess- und Auswerteeinheit durch die Mittel zur Signalübertragung verbunden ist. Vorteilhaft wird durch den Tracker eine genaue Lokalisation der am Training beteiligten operativen Instrumente ermöglicht, sodass der Benutzer genau einschätzen kann, an welcher Stelle im Trainingsmodell er sich gerade befindet.

In weiteren Ausführungsformen ist jedes handelsüblich ausgebildete operative Instrument für das Training invasiver Eingriffe mit dem erfindungsgemäßen System geeignet. Dabei können die handelsüblichen operativen Instrumente mit einer Markierung versehen werden. In Ausführungsformen sind die operativen Instrumente als Aufsätze ausgestaltet

In einer Ausführungsform sind die operativen Instrumente individuell an das auszuführende Training angepasst und können je nach Art des Trainings oder im Falle von Reparaturen vorteilhaft ausgetauscht werden.

In Ausführungsformen umfasst das erfindungsgemäße System mindestens ein Implantat. In Ausführungsformen umfasst das mindestens eine Implantat ein medizinisches Implantat wie beispielsweise ein Cochleaimplantat.

Vorteilhaft werden die Implantate vom Benutzer exakt an der gewünschten und medizinisch erforderlichen Stelle positioniert.

In einer Ausführungsform wird das oder werden die ausgewählten und medizinisch erforderlichen Implantate auf der Vorderseite der austauschbaren Übungsregion positioniert und durch die austauschbare Übungsregion hindurch zur Rückseite der austauschbaren Übungsregion geführt. Der Durchtritt und die Positionierung der Implantate an der austauschbaren Übungsregion ist als Einstichstelle im Hautüberzug sichtbar.

Die Implantate sind individuell an das auszuführende Training angepasst und können je nach Art des Trainings oder im Falle von Reparaturen vorteilhaft ausgetauscht werden.

In einer bevorzugten Ausführungsform umfasst das erfindungsgemäße System mindestens einen ersten Sensor und/oder mindestens einen zweiten Sensor. Insofern die entsprechenden Spezifikationen die ersten und die zweiten Sensoren betreffen, werden diese im Folgenden lediglich als "Sensoren" bezeichnet.

In einer bevorzugten Ausführungsform umfasst das erfindungsgemäße System mindestens einen ersten Sensor. In einer alternativen Ausführungsform umfasst das erfindungsgemäße System mindestens zwei erste Sensoren, welche voneinander beabstandet angeordnet sind, wobei mindestens ein erster Sensor als Referenzsensor dient

In Ausführungsformen registriert und misst der mindestens eine erste Sensor Änderungen in der Fördermenge oder des Drucks, wie beispielsweise einen Druckabfall, der durch den Flüssigkeitskreislauf beförderten Flüssigkeit.

In einer bevorzugten Ausführungsform ist der mindestens eine erste Sensor unabhängig ausgewählt aus einem Durchflusssensor, einem Drucksensor oder einem Volumensensor.

In Ausführungsformen ist der mindestens eine erste Sensor in oder an der austauschbaren Übungsregion angeordnet. In einer bevorzugten Ausführungsform ist der mindestens eine erste Sensor in oder an dem mindestens einen künstlichen Blutgefäß und/oder dem Schlauchsystem angeordnet. Ganz bevorzugt ist der mindestens eine erste Sensor im ersten Vorlauf oder im ersten Rücklauf des Schlauchsystems angeordnet, ganz besonders bevorzugt im ersten Rücklauf. In einer alternativen Ausführungsform ist der mindestens eine erste Sensor in der Aussparung der anatomischen Nachbildung des Körperteils oder in der austauschbaren Übungsregion angeordnet. In weiteren alternativen Ausführungsformen ist der mindestens eine erste Sensor in oder an der anatomischen Nachbildung des Körperteils angeordnet.

In einer bevorzugten Ausführungsform umfasst das erfindungsgemäße System mindestens einen zweiten Sensor. In einer alternativen Ausführungsform umfasst das erfindungsgemäße System mindestens zwei zweite Sensoren, welche voneinander beabstandet angeordnet sind, wobei mindestens ein zweiter Sensor als Referenzsensor dient

In Ausführungsformen registriert und misst der mindestens eine zweite Sensor Änderungen des Füllstandes der Flüssigkeit im Flüssigkeitsreservoir.

In einer bevorzugten Ausführungsform ist der mindestens eine zweite Sensor als Füllstandssensor ausgebildet.

In einer bevorzugten Ausführungsform ist der mindestens eine zweite Sensor im oder am Flüssigkeitsreservoir angeordnet.

In einer bevorzugten Ausführungsform ist der mindestens eine erste Sensor und/oder der mindestens eine zweite Sensor mit der Steuereinheit der Pumpeneinheit durch die Mittel zur Signalübertragung verbunden. In einer Ausführungsform empfängt die Steuereinheit elektrische Signale von den Sensoren.

Dabei werden die von den Sensoren registrierten und gemessenen Änderungen als elektrische Signale übertragen. In alternativen Ausführungsformen ist der mindestens eine erste Sensor und/oder der mindestens eine zweite Sensor mit der elektronischen Steuer-, Mess- und Auswerteeinheit durch die Mittel zur Signalübertragung verbunden.

In einer bevorzugten Ausführungsform misst der mindestens eine erste Sensor und/oder der mindestens eine zweite Sensor bei Beschädigung des mindestens einen künstlichen Blutgefäßes die Änderung der Fördermenge oder des Druckes der Flüssigkeit und/oder die Menge der austretenden Flüssigkeit. Dabei misst der mindestens eine erste Sensor die Änderung der Fördermenge oder des Druckes der Flüssigkeit und der mindestens eine zweite Sensor misst die Menge der austretenden Flüssigkeit.

In einer bevorzugten Ausführungsform des erfindungsgemäßen Verfahrens wird die Menge des aus dem mindestens einen künstlichen Blutgefäß austretenden Flüssigkeit durch den mindestens einen ersten Sensor und/oder den mindestens einen zweiten Sensor gemessen und als elektrisches Signal durch die Mittel zur Signalübertragung als rückgekoppeltes elektrisches Signal an die elektronische Steuer-, Mess- und Auswerteeinheit übertragen, wobei die elektronische Steuer-, Mess- und Auswerteeinheit die Daten analysiert und darauf basierend ein szenarioabhängiges Steuersignal durch die Mittel zur Signalübertragung an die Steuereinheit der Pumpeneinheit übermittelt, wodurch eine selbstständige Reaktion und Steuerung der mindestens einen Pumpeneinheit durch eine Erhöhung oder Absenkung der Spannung, des Stromes oder der Frequenz der mindestens einen Pumpe erfolgt

In einer weiteren bevorzugten Ausführungsform des erfindungsgemäßen Verfahrens wird die Menge des aus dem mindestens einen künstlichen Blutgefäß austretenden Flüssigkeit durch den mindestens einen ersten Sensor und/oder den mindestens einen zweiten Sensor gemessen und als elektrisches Signal durch die Mittel zur Signalübertragung an die Steuereinheit der Pumpeneinheit übertragen. Anschließend überträgt die Steuereinheit die Daten als rückgekoppelte elektrische Signale durch die Mittel zur Signalübertragung an die elektronische Steuer-, Mess- und Auswerteeinheit. Die elektronische Steuer-, Mess- und Auswerteeinheit wiederum fährt mit der Analyse der Daten und Übermittlung des szenarioabhängigen Steuersignals an die Steuereinheit fort.

In Ausführungsformen wird durch das erfindungsgemäße System eine Simulation von als Parametern bezeichnete Körperfunktionen wie dem Pulsschlag und/oder dem Blutdruck und/oder Vitalfunktionen realisiert. Dabei können die entsprechenden Vitalwerte aus dem Pulsschlag und/oder dem Blutdruck abgeleitet werden. Dies wird durch die Steuereinheit der Pumpeneinheit realisiert, welche wiederum Signale von der Detektionsvorrichtung und/oder den Sensoren empfängt und auswertet sowie Signale von elektronischen Steuer-, Mess- und Auswerteeinheit empfängt und auswertet.

In Ausführungsformen lässt sich ein mittlerer Blutdruck im Bereich von 50 mmHg bis 250 mmHg simulieren. In weiteren Ausführungsformen lässt sich eine Pulsamplitude im Bereich von 0 % bis 150 % versus den Normalwert simulieren. In weiteren Ausführungsformen lässt sich ein Pulsschlag durch einen Volumenstrom im Bereich von 20 ml/min bis 400 ml/min simulieren.

In einer weiteren Ausführungsform wird durch das erfindungsgemäße System eine Variation oder Manipulation der Körperfunktionen realisiert. Dazu zählen beispielsweise auch eine variable Blutungsintensität. In weiteren Ausführungsformen sind die simulierten Körperfunktionen patientenindividuell an das jeweilige Training angepasst.

Bei einer Berührung der anatomisch nachgebildeten Bestandteile der austauschbaren Übungsregion berühren zumindest die Spitzen der operativen Instrumente und/oder die Spitzen der Implantate oder die operativen Instrumente und/oder die Implantate per se die anatomisch nachgebildeten Bestandteile der austauschbaren Übungsregion und stellen einen körperlichen Kontakt her. Durch diese Berührung werden operative Ereignisse wie Berührungen oder Verletzungen, beispielsweise das Erreichen bestimmter Positionen in der austauschbaren Übungsregion durch die operativen Instrumente festgestellt. Diese Positionen werden durch eine Navigation erreicht, durch welche der Benutzer des erfindungsgemäßen Systems beispielsweise im Rahmen seiner Ausbildung lernt, vorgegebene anatomische Stellen zu lokalisieren.

Bei einer Beschädigung bzw. Verletzung der anatomisch nachgebildeten Bestandteile der austauschbaren Übungsregion durchstechen oder durchschneiden zumindest die Spitzen der operativen Instrumente und/oder die Spitzen der Implantate oder die operativen Instrumente und/oder die Implantate per se die anatomisch nachgebildeten Bestandteile der austauschbaren Übungsregion und stellen einen körperlichen Kontakt her. In einer Ausführungsform ist eine Beschädigung bzw. Verletzung der anatomisch nachgebildeten Bestandteile der austauschbaren Übungsregion reversibel, das heißt, dass die entsprechend beschädigten bzw. verletzten anatomisch nachgebildeten Bestandteile nachträglich repariert werden können oder sich selbst wieder heilen, beispielsweise durch die Rückstellkraft der Materialien der künstlichen Blutgefäße und/oder des Nervengewebes und/oder des Hautüberzuges. In alternativen Ausführungsformen ist eine Beschädigung bzw. Verletzung der anatomisch nachgebildeten Bestandteile der austauschbaren Übungsregion irreversibel, das heißt, dass die entsprechend beschädigten bzw. verletzten anatomisch nachgebildeten Bestandteile nachträglich nicht mehr repariert werden können.

Dabei ist es irrelevant, ob das mindestens eine künstliche Blutgefäß, das anatomisch nachgebildete Nervengewebe und/oder der anatomisch nachgebildete Hautüberzug alleine oder in Kombination berührt oder beschädigt bzw. verletzt wurden.

Erfindungsgemäß ist das System derart ausgebildet, dass die Detektionsvorrichtung eine Interaktion des Benutzers mit den anatomisch nachgebildeten Bestandteilen der austauschbaren Übungsregion erfasst. Das erfindungsgemäße System ist weiterhin derart ausgebildet, dass die durch die Interaktion erzeugten Daten als elektrische Signale anschließend durch die Mittel zur Signalübertragung als rückgekoppelte elektrische Signale an die elektronische Steuer-, Mess- und Auswerteeinheit übertragen werden, wobei die elektronische Steuer-, Mess- und Auswerteeinheit die Daten analysiert und darauf basierend ein szenarioabhängiges Steuersignaldurch die Mittel zur Signalübertragung an die Steuereinheit der Pumpeneinheit übermittelt, wodurch eine selbstständige Reaktion und Steuerung der mindestens einen Pumpeneinheit durch eine Erhöhung oder Absenkung der Spannung, des Stromes oder der Frequenz der mindestens einen Pumpe erfolgt.

In einer weiteren bevorzugten Ausführungsform ist das erfindungsgemäße System derart ausgebildet, dass die durch die Interaktion erzeugten Daten als elektrische Signale durch die Mittel zur Signalübertragung an die Steuereinheit der Pumpeneinheit übertragen werden. Die Steuereinheit überträgt die Daten anschließend als rückgekoppelte elektrische Signale durch die Mittel zur Signalübertragung an die elektronische Steuer-, Mess- und Auswerteeinheit. Die elektronische Steuer-, Mess- und Auswerteeinheit wiederum fährt mit der Analyse der Daten und Übermittlung des szenarioabhängigen Steuersignals an die Steuereinheit fort.

Vorteilhaft wird damit der Blutfluss durch Änderung der Fördermenge sowie der Blutdruck und Puls durch die Änderung der Intensität des Druckes der Flüssigkeit individuell auf das jeweilige Szenario durch die mindestens eine Pumpe angepasst.

In Ausführungsformen werden die Szenarien vor dem Training festgelegt. Durch die zuvor festgelegten Szenarien werden die entsprechenden Körperfunktionen eingestellt. Dies wird durch die Mess-, Steuer- und Auswerteeinheit realisiert.

Unter einer Interaktion des Benutzers mit dem System wird im Sinne der Erfindung zumindest eine teilweise Berührung oder Beschädigung bzw. Verletzung der anatomisch nachgebildeten Bestandteile der austauschbaren Übungsregion und somit auch mit den Risikostrukturen verstanden. Dabei umfasst die Berührung auch das Erreichen bestimmter Risikostrukturen Positionen oder Strukturen des Trainingsmodells durch die operativen Instrumente.

In Ausführungsformen wird eine Berührung oder Beschädigung bzw. Verletzung der anatomisch nachgebildeten Bestandteile und somit der Risikostrukturen durch die elektrisch leitfähigen und/oder lichtleitenden Strukturen der Detektionsvorrichtung erfasst. Die erfasste Berührung oder Beschädigung bzw. Verletzung der anatomisch nachgebildeten Bestandteile wird von der Detektionsvorrichtung als elektrisches Signal und szenarioabhängige Steuerinformation durch die Mittel zur Signalübertragung an die mit der Detektionsvorrichtung gekoppelte Steuereinheit der Pumpeneinheit übermittelt.

In Ausführungsformen werden durch die Beschädigung bzw. Verletzung der anatomisch nachgebildeten Bestandteile Änderungen der Fördermenge oder des Druckes der Flüssigkeit durch mindestens einen ersten Sensor registriert und gemessen. In einer weiteren Ausführungsform werden durch die Beschädigung bzw. Verletzung der anatomisch nachgebildeten Bestandteile Änderungen des Füllstandes der Flüssigkeit im Flüssigkeitsreservoir durch mindestens einen zweiten Sensor registriert und gemessen. Diese durch die Sensoren registrierten und gemessenen Änderungen werden als elektrische Signale durch die Mittel zur Signalübertragung an die mit den Sensoren gekoppelte Steuereinheit der Pumpeneinheit übermittelt.

In Ausführungsformen, bei einer Beschädigung des mindestens einen künstlichen Blutgefäßes, tritt Flüssigkeit aus dem als Öffnung ausgebildeten Beschädigungsbereich des künstlichen Blutgefäßes aus. Dabei wird durch die Sensoren die Menge der aus dem mindestens einen künstlichen Blutgefäß austretenden Flüssigkeit gemessen. Dabei ermittelt der mindestens eine erste Sensor die Menge der austretenden Flüssigkeit anhand der Änderung der Fördermenge oder des Druckes der Flüssigkeit in dem mindestens einen künstlichen Blutgefäß und/oder dem Schlauchsystem und/oder der mindestens eine zweite Sensor ermittelt die Menge der austretenden Flüssigkeit anhand des Füllstandes im Flüssigkeitsreservoir. Auch diese Daten werden als elektrische Signale durch die Mittel zur Signalübertragung an die Steuereinheit der Pumpeneinheit übermittelt.

Durch den Austritt von Flüssigkeit aus der als Beschädigungsbereich ausgebildeten Öffnung wird diese dem offenen oder geschlossenen Flüssigkeitskreislauf nicht wieder zugefügt, wodurch es zu Verlusten der Flüssigkeit im Flüssigkeitskreislauf kommt und noch vorhandene Flüssigkeit im Flüssigkeitsreservoir aufgebraucht wird. Es wird daher ein Blutverlust des Patienten simuliert welcher variabel gestaltbar ist. Der Benutzer muss die Öffnung wieder verschließen, bevor das Volumen der Flüssigkeit im Flüssigkeitskreislauf ein kritisches Level unterschritten hat. Unter einem kritischen Level wird im Sinne der Erfindung ein Flüssigkeitsvolumen verstanden, welches im Realfall erreicht wird, und tödlich endet, wenn nicht von außen ein Blutersatz zugeführt wird. In einer Ausführungsform entspricht das kritische Level der Flüssigkeit einem Volumen von kleiner als 3 I.

Die Mechanismen und nachfolgende Reaktion der Pumpen bei Austritt der Flüssigkeit aus der Öffnung im Falle einer Beschädigung oder Verletzung sind für den geschlossenen und offenen Flüssigkeitskreislauf gleich.

In Ausführungsformen steuert und veranlasst die Steuereinheit der Pumpeneinheit bei einer Berührung oder Beschädigung bzw. Verletzung der anatomisch nachgebildeten Bestandteile der austauschbaren Übungsregion eine Erhöhung oder Absenkung der Spannung, des Stromes oder der Frequenz der mindestens eine Pumpe der Pumpeneinheit. Dabei simuliert die Erhöhung oder Absenkung der Spannung, des Stromes oder der Frequenz und der damit einhergehenden Drehzahländerung durch die Erhöhung oder Absenkung von Fördermenge und Druck der Flüssigkeit in dem Flüssigkeitskreislauf realitätsgetreu ein erhöhter oder erniedrigter Pulsschlag und/oder einen erhöhten oder erniedrigten Blutdruck. Dies erfolgt entweder als generelle Betriebsweise des erfindungsgemäßen Systems, um ein individuelles, an die jeweilige Physiologie des Patienten angepasstes Training zu ermöglichen, oder als Gefahrenhinweis für den Benutzer bei Berührung oder Beschädigung bzw. Verletzung der anatomisch nachgebildeten Bestandteile der austauschbaren Übungsregion und somit der Risikostrukturen. Vorzugsweise wird die mindestens eine Pumpe der Pumpeneinheit gepulst betrieben. Dazu wird der Versorgungsstrom, die Spannung oder die Frequenz der mindestens einen Pumpe variabel je nach Anwendungszweck erhöht und/oder abgesenkt.

In einer Ausführungsform, insbesondere wenn die anatomische Nachbildung von Nervengewebe verletzt wurde, wird durch die Erhöhung oder Absenkung der Spannung, des Stromes oder der Frequenz der mindestens einen Pumpe und die damit einhergehende Drehzahländerung in Form einer Erhöhung oder Absenkung von Fördermenge und Druck der Flüssigkeit in dem Flüssigkeitskreislauf realitätsgetreu ein erhöhter oder verlangsamter Adrenalinausstoß des Patienten simuliert.

In Ausführungsformen wird bei der Berührung oder der Beschädigung bzw. Verletzung der anatomisch nachgebildeten Bestandteile der austauschbaren Übungsregion und somit auch mit den Risikostrukturen die Bildung von Aneurysmen und/oder Hämatomen nachgebildet.

Ein weiterer Aspekt der Erfindung betrifft ein Verfahren zur Validierung und zum Training invasiver Eingriffe in der Human- und Veterinärmedizin mittels des erfindungsgemäßen Systems. Im Sinne der Erfindung erfasst die als elektrisch leitfähige Struktur und/oder als lichtleitende Struktur ausgebildete Detektionsvorrichtung eine Interaktion des Benutzers mit den anatomisch nachgebildeten Bestandteilen der austauschbaren Übungsregion, wobei unter einer Interaktion zumindest eine teilweise Berührung oder Beschädigung bzw. Verletzung der anatomisch nachgebildeten Bestandteile der austauschbaren Übungsregion verstanden wird. Anschließend werden die durch die Interaktion erzeugten Daten als elektrische Signale durch die Mittel zur Signalübertragung als rückgekoppelte elektrische Signale an die mindestens eine elektronische Steuer-, Mess- und Auswerteeinheit übertragen, wobei die elektronische Steuer-, Mess- und Auswerteeinheit die Daten analysiert und darauf basierend ein szenarioabhängiges Steuersignal durch die Mittel zur Signalübertragung an die Steuereinheit der Pumpeneinheit übermittelt, wodurch eine selbstständige Reaktion und Steuerung der mindestens einen Pumpeneinheit durch eine Erhöhung oder Absenkung der Spannung, des Stromes oder der Frequenz der mindestens einen Pumpe erfolgt.

In einer bevorzugten Ausführungsform erfasst die Detektionsvorrichtung eine Interaktion des Benutzers mit den anatomisch nachgebildeten Bestandteilen der austauschbaren Übungsregion, wobei anschließend die durch die Interaktion erzeugten Daten als elektrische Signale durch die Mittel zur Signalübertragung an die Steuereinheit der Pumpeneinheit übertragen werden, und die Steuereinheit die Daten als rückgekoppelte elektrische Signale durch die Mittel zur Signalübertragung an die elektronische Steuer-, Mess- und Auswerteeinheit überträgt. Die elektronische Steuer-, Mess- und Auswerteeinheit wiederum fährt mit der Analyse der Daten und Übermittlung des szenarioabhängigen Steuersignals an die Steuereinheit fort.

In Ausführungsformen, vor Beginn der Trainings, werden alle Komponenten des erfindungsgemäßen Systems angeschlossen, wodurch eine automatische Systeminitiierung erfolgt. Innerhalb dieses Prozesses wird eine Entlüftung des Flüssigkeitskreislaufes, insbesondere aller Schläuche des Schlauchsystems sowie des mindestens einen künstlichen Blutgefäßes, vorgenommen, bevor Flüssigkeit in den Flüssigkeitskreislauf geleitet wird. Dies erfolgt, weil sonst die automatische Regelung des Systems verfälscht werden würde, da restliches Gas wie beispielsweise Luft durch seine Kompressibilität die Messung verfälschen würde. Nach dem Entlüften wird der Flüssigkeitskreislauf gasdicht verschlossen.

In Ausführungsformen erfolgt daraufhin eine automatische Kalibrierung des Systems. Vorteilhaft werden dadurch in Abhängigkeit von Schlauchlängen, Durchmesser und Form der Schläuche des Schlauchsystems und des mindestens einen künstlichen Blutgefäßes die notwendigen Regelparameter eingestellt, um die gewünschten szenarioabhängigen Pulskurven zu erhalten.

In einer Ausführungsform erfolgt nach der automatischen Kalibrierung eine szenarioabhängige Anpassung der Pulskurve. Vorteilhaft lassen sich damit realistische OP-Situationen und Eingriffe am Trainingsmodell simulieren.

In Ausführungsformen, am Ende des Trainings, erfolgt eine Belüftung des Flüssigkeitskreislaufes, insbesondere des Schlauchsystems und/oder des mindestens einen künstlichen Blutgefäßes mit Gas. Dabei wird ein Gas, beispielsweise Luft, durch mindestens eine Pumpe, welche zur Beförderung von Flüssigkeiten und Gasen ausgebildet ist, durch den gesamten Flüssigkeitskreislauf und das mindestens eine künstliche Blutgefäß gepumpt. Vorteilhaft wird dadurch beim Austausch von Komponenten wie beispielsweise der austauschbaren Übungsregion oder generell beim Abbau des erfindungsgemäßen Systems der ungewollte Austritt von Flüssigkeit verhindert.

Erfindungsgemäß umfasst das System mindestens eine elektronische Steuer-, Mess- und Auswerteeinheit.

Indem die elektronische Steuer-, Mess- und Auswerteeinheit ein szenarioabhängiges Steuersignal an die Steuereinheit übermittelt, kann die Steuereinheit vorteilhaft flexibel und in Echtzeit auf das jeweilige Szenario reagieren.

In Ausführungsformen handelt es sich bei der elektronischen Steuer-, Mess- und Auswerteeinheit um einen Computer.

In einer bevorzugten Ausführungsform ist auf der elektronischen Steuer-, Mess- und Auswerteeinheit ein Computerprogrammprodukt gespeichert.

In einer bevorzugten Ausführungsform dientein Computerprogrammprodukt für die Durchführung des erfindungsgemäßen Verfahrens. Dabei sorgt das Computerprogrammprodukt für eine virtuelle und/oder realistische Darstellung des Operationsfeldes und Trainingsverlaufs sorgt. Weiterhin ermöglicht das Computerprogrammprodukt die grafische Darstellung der Parameter der Körperfunktionen, welche szenarioabhängig vor dem Training ausgewählt wurden und während des Trainings gemessen wurden. Dabei werden auch die elektrischen und/oder optischen Signale von den Eingangskanälen der Strukturen der Detektionsvorrichtung und/oder der Steuereinheit der Pumpeneinheit an das Computerprogrammprodukt durch die Mittel zur Signalübertragung übermittelt.

Durch die elektronische Steuer-, Mess- und Auswerteeinheit und das darauf gespeicherte Computerprogrammprodukt wird eine virtuelle und/oder realistische Darstellung der Untersuchung sowie eine automatisierte Kontrolle und Überwachung des Operationsfeldes beim Training am Trainingsmodell, also im Betrieb des Systems, gewährleistet. Somit wirkt die elektronische Steuer-, Mess- und Auswerteeinheit als OP-Assistenzsystem während des Trainings am erfindungsgemäßen System. In einer Ausführungsform wählt das auf der elektronischen Steuer-, Mess- und Auswerteeinheit gespeicherte Computerprogrammprodukt in Abhängigkeit der von der Detektionsvorrichtung und/oder den Sensoren ermittelten Interaktion und übermittelten elektrischen Signale einen darauf basierenden Algorithmus aus, welcher als szenarioabhängiges Steuersignal an die Steuereinheit der Pumpeneinheit übermittelt wird. Durch diesen Algorithmus wird u.a. die Spannung, der Strom, die Frequenz und damit einhergehend die Drehzahl der mindestens einen Pumpe geregelt und gesteuert und somit das Trainingsszenario in Echtzeit beeinflusst.

In Ausführungsformen entspricht die austauschbare Übungsregion dem Operationsfeld für den Benutzer des Trainingsmodells, in welchem er operative und invasive Eingriffe übt. In alternativen Ausführungsformen entspricht die anatomische Nachbildung des Körperteils oder die anatomische Nachbildung des Körperteils und die austauschbare Übungsregion dem Operationsfeld für den Benutzer des Trainingsmodells, in welchem er operative und invasive Eingriffe übt. Im Folgenden wird hinsichtlich des Operationsfeldes nur auf die austauschbare Übungsregion verwiesen, wobei dies auch die anatomische Nachbildung des Körperteils oder die anatomische Nachbildung des Körperteils und die austauschbare Übungsregion betreffen kann. Unter einer virtuellen Darstellung wird eine dreidimensionale Wiedergabe des Trainingsverlaufs im Operationsfeld der austauschbaren Übungsregion verstanden, welche durch ein Computerprogrammprodukt generiert wird. Dabei dient medizinisches Bildmaterial, welches auf einem Speichermedium hinterlegt ist, als Grundlage für die virtuelle Darstellung, welche von einem Computerprogrammprodukt generiert wird. Dabei wird während des Trainings die Position und die Bewegung der operativen Instrumente in dem dreidimensional dargestellten Trainingsmodell lagegetreu durch das Computerprogrammprodukt nachgebildet. Insbesondere werden dabei die austauschbare Übungsregion und die anatomisch nachgebildeten Bestandteile dreidimensional und realistisch dargestellt. In Ausführungsformen wird die austauschbare Übungsregion, insbesondere die anatomisch nachgebildeten Bestandteile, sowie die Risikostrukturen durch das Computerprogrammprodukt zumindest teilweise transparent dargestellt. Vorteilhaft betrifft dies insbesondere den Hautüberzug und/oder das Fettgewebe und/oder die Muskeln, wodurch vorteilhaft das eigentliche Training an den Risikostrukturen überwacht werden kann.

In einer Ausführungsform werden die durch die Interaktion erzeugten Daten, welche an die elektronische Steuer-, Mess- und Auswerteeinheit übertragen wurden, genutzt, um dem Benutzer weitere Informationen zu visualisieren. So können aus dem simulierten Puls neben einer Pulskurve oder einer Blutdruckkurve mittels des auf der elektronischen Steuer-, Mess- und Auswerteeinheit enthaltenen Computerprogrammprodukts auch Vitalwerte für den Benutzer visualisiert werden.

Unter einer realistischen Darstellung wird eine visuelle Wiedergabe des Trainingsverlaufs im Operationsfeld der austauschbaren Übungsregion verstanden, welche beispielsweise durch ein optoelektronisches Detektionsmittel als Videobild in Echtzeit übertragen wird.

Die virtuelle und/oder realistische Darstellung des Operationsfeldes wird über die Mittel zur Signalübertragung an die elektronische Steuer-, Mess- und Auswerteeinheit übermittelt, während der Benutzer gleichzeitig mit dem Trainingsmodell, insbesondere der austauschbaren Übungsregion, agiert.

In Ausführungsformen umfasst das erfindungsgemäße System die Mittel zur Signalübertragung. In einer Ausführungsform handelt es sich bei den Mitteln zur Signalübertragung um elektrische Kabel. In weiteren Ausführungsformen handelt es sich bei den Mitteln zur Signalübertragung um eine drahtlose Verbindung, welche beispielsweise als Bluetooth oder WLAN ausgebildet ist. In einer weiteren Ausführungsform handelt es sich bei den Mitteln zur Signalübertragung um eine Kombination von elektrischen Kabeln und drahtloser Verbindung.

Erfindungsgemäß ist die mindestens eine Detektionsvorrichtung mit der elektronischen Steuer-, Mess- und Auswerteeinheit durch die Mittel zur Signalübertragung verbunden. In einer weiteren bevorzugten Ausführungsform ist die mindestens eine Detektionsvorrichtung durch die Mittel zur Signalübertragung mit der Steuereinheit der Pumpeneinheit verbunden.

Bevorzugt ist die elektronische Steuer-, Mess- und Auswerteeinheit durch die Mittel zur Signalübertragung mit der Steuereinrichtung der Pumpeneinheit verbunden. Durch die Mittel zur Signalübertragung werden die durch die Detektionsvorrichtung ermittelten Daten, welche in elektrische Signale an die Steuereinheit übertragen wurden, von der Steuereinheit an die elektronische Steuer-, Mess- und Auswerteeinheit übertragen. Die elektronische Steuer-, Mess- und Auswerteeinheit wiederum analysiert diese Informationen und das auf ihr gespeicherte Computerprogrammprodukt wählt darauf basierend einen Algorithmus zur Betriebsweise der mindestens einen Pumpe aus. Dieser Algorithmus bestimmt beispielsweise die Strom-, Spannungs-, oder Frequenzänderung und damit einhergehend eine Drehzahländerung der mindestens einen Pumpe und legt somit das Trainingsszenario fest und beeinflusst dieses in Echtzeit. Die dazugehörigen Steuersignale werden wiederum von der elektronischen Steuer-, Mess- und Auswerteeinheit an die Steuereinheit der Pumpeneinheit übermittelt, welche dann die mindestens eine Pumpe ansteuert. In Abhängigkeit vom Training am Trainingsmodell wird die Detektionsvorrichtung und/oder die Sensoren eine weitere Änderung registrieren, sodass die Steuerung und Überwachung durch das rückgekoppelte elektrische Signal, welches zwischen der Detektionsvorrichtung und/oder den Sensoren oder der Steuereinrichtung der Pumpeneinheit und der elektronischen Steuer-, Mess- und Auswerteeinheit durch die Mittel zur Signalübertragung kontinuierlich ausgetauscht wird, entsprechend angepasst wird.

In Ausführungsformen sind die operativen Instrumente und/oder die Implantate durch die Mittel zur Signalübertragung mit einer elektronischen Steuer-, Mess- und Auswerteeinheit des Systems verbunden.

In einer Ausführungsform können die zu lernenden chirurgischen Szenarien anhand von Ablauf-Protokollen studiert werden. In den Ablauf-Protokollen werden Parameter festgelegt, die über die Qualität des geübten Eingriffes und damit (bei mehreren Tests) über den Lernerfolg als Erfolgskontrolle Auskunft geben. Bei den Parametern handelt es sich beispielsweise um die Durchführungsdauer, economy of hand-movement, Verletzung von funktionell wichtigen anatomischen Arealen.

In Ausführungsformen werden durch das Computerprogrammprodukt weiterhin die beim Training verwendeten operativen Instrumente und/oder die verwendeten Implantate aufgrund der an ihnen angebrachten Markierung erkannt und entsprechend für die jeweilige Trainingssituation kalibriert. Somit werden das Training und der Trainingsverlauf am Trainingsmodell gesteuert und kontrolliert.

In einer Ausführungsform wird die Kalibrierung der operativen Instrumente und/oder der Implantate vorgenommen, um die Achsenlängen und den Ort der Spitze der operativen Instrumente und/oder der Implantate zu bestimmen. Weiterhin findet eine Richtungskalibrierung statt, bei welcher die Orientierung der operativen Instrumente und/oder der Implantate innerhalb der virtuellen und/oder realistischen Darstellung des Operationsfeldes zu bestimmen.

In weiteren Ausführungsformen wird durch das Computerprogrammprodukt die entsprechend verwendete austauschbare Übungsregion mit den auf ihrem jeweiligen Speichermedium enthaltenen spezifischen Parametern zur Ausgestaltung der austauschbaren Übungsregion sowie patientenindividuelle Daten erkannt.

In einer weiteren Ausführungsform wird eine Patienten-Kalibrierung vorgenommen, bei welcher das in der virtuellen und/oder realistischen Darstellung erzeugte Koordinatensystem der in der austauschbaren Übungsregion an dem Koordinatensystem der operativen Instrumente und/oder der Implantate ausgerichtet wird.

In einer bevorzugten Ausführungsform wird das rückgekoppelte Signal des in der austauschbaren Übungsregion des Trainingsmodells angeordneten optoelektronischen Detektionsmittels an die elektronische Steuer-, Mess- und Auswerteeinheit gesendet und von dem Computerprogrammprodukt ausgewertet und analysiert, sodass der Trainingsverlauf in Echtzeit überwacht und beurteilt wird. Auch die Trainingsdauer, Navigation und die Anzahl der Verletzungen werden vom Computerprogrammprodukt registriert.

In Ausführungsformen ist die anatomische Nachbildung des Körperteils und/oder die austauschbare Übungsregion mittels additiver Fertigungsverfahren auf Basis von dreidimensionalen Patientendaten herstellbar. Beispielsweise ist die anatomische Nachbildung des Körperteils und/oder die austauschbare Übungsregion mittels eines Rapid Prototyping Verfahrens herstellbar. Vorteilhaft lässt sich damit auch eine patientenindividuelle Anatomie der anatomischen Nachbildung des Körperteils bzw. der austauschbaren Übungsregion darstellen, wodurch jedes Training individuell ausgestaltet und durchführbar ist.

In Ausführungsformen umfasst das erfindungsgemäße System eine Haltevorrichtung. In Ausführungsformen ist die anatomische Nachbildung eines Körperteils und/oder die anatomische Nachbildung einer austauschbaren Übungsregion in eine Haltevorrichtung einsetzbar ausgebildet. Dabei weist die anatomische Nachbildung des Körperteils und/oder die anatomische Nachbildung der austauschbaren Übungsregion eine Vorderseite, welche von außen zugänglich ist, und eine Rückseite, welche formschlüssig mit der Haltevorrichtung verbunden ist, auf. In Ausführungsformen befindet sich die Rückseite der anatomischen Nachbildung eines Körperteils und/oder der austauschbaren Übungsregion zumindest teilweise in körperlichem Kontakt mit einer Haltevorrichtung.

In einer Ausführungsform ist die Haltevorrichtung als technische Halterung ausgebildet. Dabei wird unter einer technischen Halterung eine rein mechanisch und funktionell ausgebildete und nicht anatomisch ausgebildete Halterung verstanden. Vorteilhaft lässt sich die anatomische Nachbildung des Körperteils und/oder die anatomische Nachbildung der austauschbaren Übungsregion in jede denkbar ausgestaltete Haltevorrichtung formschlüssig einsetzen. Vorteilhaft ist die anatomische Nachbildung des Körperteils und/oder die austauschbare Übungsregion durch die Haltevorrichtung während des Trainings stabil gelagert und gegen Verrutschen gesichert.

In Ausführungsformen ist die Haltevorrichtung gleichzeitig als Auffangschale ausgebildet. Vorteilhaft wird dadurch austretende Flüssigkeit bei einer Verletzung des mindestens einen künstlichen Blutgefäßes durch die Haltevorrichtung aufgefangen und verursacht keine Verunreinigungen. Zudem kann somit die aufgefangene Flüssigkeit wiederverwendet werden.

In bevorzugten Ausführungsformen ist die für sich beanspruchte anatomische Nachbildung einer austauschbaren Übungsregion in eine Haltevorrichtung einsetzbar ausgebildet.

In einer bevorzugten Ausführungsform umfasst das Trainingsmodell des erfindungsgemäßen Systems ein optoelektronisches Detektionsmittel.

In Ausführungsformen ist das optoelektronische Detektionsmittel in der anatomischen Nachbildung des Körperteils angeordnet. In Ausführungsformen ist das optoelektronische Detektionsmittel derart in der Aussparung der anatomischen Nachbildung des Körperteils angeordnet, dass dieses mittels der elektronischen Steuer-, Mess- und Auswerteeinheit zur Erfassung der operativen Eingriffe sowie der Überwachung der Positionierung der operativen Instrumente und/oder der Implantate an der Rückseite der austauschbaren Übungsregion ausgebildet ist. In alternativen Ausführungsformen ist das optoelektronische Detektionsmittel an der Rückseite der austauschbaren Übungsregion angeordnet.

In Ausführungsformen ist das optoelektronische Detektionsmittel durch die Mittel zur Signalübertragung mit der elektronischen Steuer-, Mess- und Auswerteeinheit verbunden, wodurch vorteilhaft ein rückgekoppeltes Signal vom optoelektronischen Detektionsmittel an die elektronische Steuer-, Mess- und Auswerteeinheit gesendet wird. Das übermittelte Signal enthält Daten über den aktuellen Trainingsverlauf. Die Daten umfassen audiovisuelle Spezifikationen wie Bildauflösung und abgeleitetes Seitenverhältnis, Bildwiederholungsrate, und Farbtiefe. Durch die Anordnung des optoelektronischen Detektionsmittels im Trainingsmodell werden vorteilhaft die während des Trainings stattfindenden operativen Eingriffe und Techniken durch die Mittel zur Signalübertragung an die elektronische Steuer-, Mess- und Auswerteeinheit übermittelt. Dadurch wird eine Überwachung der Positionierung der operativen Instrumente und/oder der Implantate an der austauschbaren Übungsregion gewährleistet.

In Ausführungsformen dient das optoelektronische Detektionsmittel dazu, die ablaufenden Vorgänge innerhalb des Trainingsmodells zu erfassen und dem Benutzer in Echtzeit über den Trainingserfolg und die Positionierung der operativen Instrumente und/oder der Implantate zu informieren. Das Operationsfeld wird somit automatisiert kontrolliert. Zum Trainingserfolg zählt beispielsweise die Positionierung der operativen Instrumente und/oder der Implantate, beispielsweise wie weit ein Cochlea-Implantat in die anatomische Nachbildung des Körperteils und/oder eine austauschbare Übungsregion eingeführt werden konnte.

Das optoelektronische Detektionsmittel gewährleistet zudem vorteilhaft eine Erfolgskontrolle des Eingriffes am Trainingsmodell, indem beispielsweise abgeschätzt werden kann, wie weit ein operatives Instrument und/oder ein Implantat eingeführt werden kann. Durch das optoelektronische Detektionsmittel werden die verletzbaren Risikostrukturen vorteilhaft überwacht.

Während des Eingriffes können durch das optoelektronische Detektionsmittel vorteilhaft Aussagen über mögliche verletzte Risikostrukturen und somit Verletzungen getroffen werden und so der Operationserfolg verfolgt werden. Die Erfolgskontrolle bzw. der Lernerfolg geben dem Benutzer Sicherheit und Routine bei den operativen Eingriffen. Weiterhin wird vorteilhaft der Verlauf der Operation bewertet. Es wird beispielsweise eine Bewertung getroffen über die Art der Positionierung der operativen Instrumente und/oder der Implantate bzw. wieviel vom zu entfernenden Gewebe oder der Risikostrukturen oder dem die Risikostrukturen umgebenden anatomischen Raum abgetragen wurde.

In Ausführungsformen handelt es sich bei dem optoelektronischen Detektionsmittel um ein Aufnahmegerät wie beispielsweise eine Video-Digitalkamera. In alternativen Ausführungsformen handelt es sich bei dem optoelektronischen Detektionsmittel um eine Webcam. In Ausführungsformen hat das optoelektronische Detektionsmittel einen CMOS-Sensor. In alternativen Ausführungsformen hat das optoelektronische Detektionsmittel einen CCD-Sensor, speziell einem zweidimensionalen CCD-Array-Sensor.

In Ausführungsformen wird das rückgekoppelte Signal des optoelektronischen Detektionsmittels an die elektronische Steuer-, Mess- und Auswerteeinheit gesendet und von dem Computerprogrammprodukt ausgewertet und analysiert, sodass der Trainingsverlauf in Echtzeit überwacht und beurteilt wird. Auch die Trainingsdauer und die Anzahl der Verletzungen werden vom Computerprogrammprodukt registriert. Vorteilhaft kann das Training gegebenenfalls frühzeitig bei auftretenden Fehlern unterbrochen und somit Zeit gespart werden bzw. kann das Training später fortgesetzt bzw. neu gestartet werden.

Unter auftretenden Fehlern wird beispielsweise eine falsche Positionierung verbunden mit einem falschen Durchtritt der operativen Instrumente und/oder der Implantate an der austauschbaren Übungsregion verstanden. Die Anzahl der Verletzungen von funktionell wichtigen anatomischen Arealen, welche durch einen falschen Durchtritt oder Positionierung der operativen Instrumente und/oder der Implantate hervorgerufen wurden, werden dabei registriert.

In Ausführungsformen überträgt das optoelektronische Detektionsmittel die aufgezeichneten Daten im Betrieb, also während des Trainings, als elektrische Signale an die elektronische Steuer-, Mess- und Auswerteeinheit. In weiteren Ausführungsformen überträgt das optoelektronische Detektionsmittel die aufgezeichneten Daten als elektrische Signale vor oder nach dem Training an die elektronische Steuer-, Mess- und Auswerteeinheit.

In einer bevorzugten Ausführungsform umfasst das Trainingsmodell des erfindungsgemäßen Systems ein Speichermedium.

In Ausführungsformen umfasst die austauschbare Übungsregion ein Speichermedium. In weiteren Ausführungsformen ist das Speichermedium an der Rückseite der austauschbaren Übungsregion angeordnet.

Die anatomische Nachbildung des Körperteils und/oder die austauschbare Übungsregion bilden mit dem Speichermedium eine lösbare Steckverbindung. Dadurch wird eine elektrische Verbindung sowie eine Datenverbindung, speziell als Hardwareschnittstelle, sichergestellt.

Das Speichermedium wird auch als Datenspeicher bezeichnet. In Ausführungsformen dient ein Halbleiterspeicher als Speichermedium. In Ausführungsformen ist das Speichermedium ein Speicherchip. In Ausführungsformen ist das Speichermedium als nichtflüchtiger Datenspeicher wie beispielsweise als Flash-Speicher ausgebildet.

In einer Ausführungsform sind auf dem Speichermedium Datensätze abgespeichert. In Ausführungsformen sind auf dem Speichermedium patientenindividuelle Daten gespeichert. Durch die bereitgestellten patientenindividuellen Daten wird vorteilhaft ein speziell angepasstes Trainingsmodell an die entsprechenden Anatomien und Krankheitsgeschichten und damit eine effektive und gezielte Benutzung des Trainingsmodells ermöglicht. Die spezifischen Parameter zu der Ausgestaltung der austauschbaren Übungsregion geben darüber hinaus Hinweise zu der zu untersuchenden Körperregion.

In Ausführungsformen umfassen die auf dem Speichermedium gespeicherten patientenindividuellen Daten Parameter zur Anatomie des Patienten, zum Alter des Patienten, zu Vorbefunden, zur Pathogenese, zum Krankheitsbild, sowie zu bereits vorhandenen Nachweise von bildgebenden Verfahren wie beispielsweise CT- oder Röntgenbilder, welche als Vorlagen und zur Orientierung dienen und die Trainingssituation möglichst realistisch erscheinen lassen. In einer Ausführungsform entsprechen die patientenindividuellen Daten der Krankenakte des jeweiligen zu untersuchenden Patienten. Vorteilhaft kann sich der Benutzer vor dem Übungseingriff ein Bild über das anstehende und auszuführende Training machen. Somit ist der zu trainierende Eingriff realistischer gestaltet.

In weiteren Ausführungsformen sind auf dem Speichermedium spezifische Parameter zu der Ausgestaltung der austauschbaren Übungsregion und damit der zu untersuchenden Körperregion gespeichert. Vorteilhaft liegt damit die zu untersuchende Körperregion nicht nur als austauschbare Übungsregion vor, sondern umfasst auch alle benötigten spezifischen Parameter wie Ausgestaltung und Geometrie der austauschbaren Übungsregion zur Durchführung des Trainings.

In Ausführungsformen ist das Speichermedium mit weiteren patientenindividuellen Daten beschreibbar oder überschreibbar. Dies erfolgt, indem diese zusätzlich auf das Speichermedium geschrieben und ergänzt, oder die ursprünglich vorhandenen patientenindividuellen Daten durch diese überschrieben werden. Unter weiteren patientenindividuellen Daten werden entweder erweitere Befunde desselben Patienten oder weitere Daten eines anderen Patienten mit einem anderen Krankheitsbild und Anatomie und Alter verstanden, welche komplett neu oder zusätzlich auf das Speichermedium geschrieben und abgespeichert werden. Somit kann der Benutzer stets neue Eingriffe am Trainingsmodell üben. Weiterhin ist die Steuerelektronik des Speichermediums stets aktualisierbar, wodurch Fehler wie Manipulationen oder Ausfälle reduziert werden.

In Ausführungsformen ist das Speichermedium mechanisch lösbar mit der austauschbaren Übungsregion verbunden. In einer Ausführungsform ist das Speichermedium lösbar in der austauschbaren Übungsregion angeordnet. In weiteren Ausführungsformen ist das Speichermedium lösbar in der Rückseite der austauschbaren Übungsregion angeordnet. Vorteilhaft kann das Speichermedium somit von der austauschbaren Übungsregion zum Beschreiben mit weiteren oder neuen patientenindividuellen Daten, zum Beschreiben mit weiteren oder neuen spezifischen Parametern zu der Ausgestaltung der austauschbaren Übungsregion oder zur Aktualisierung der Steuerelektronik entfernt und an diese wieder angeschlossen werden.

Durch die lösbare Anordnung des Speichermediums in der austauschbaren Übungsregion ist es möglich, verschiedene Speichermedien, welche jeweils unterschiedliche patientenindividuelle Daten und spezifische Parameter zu der Ausgestaltung austauschbaren Übungsregion enthalten, an die austauschbare Übungsregion anzuschließen und somit verschiedene Krankheitsbilder für die gleiche ausgebildete austauschbare Übungsregion zu trainieren.

In Ausführungsformen ist das Speichermedium mechanisch und elektrisch lösbar mit der austauschbaren Übungsregion verbunden.

In Ausführungsformen ist das Speichermedium durch die Mittel zur Signalübertragung mit der elektronischen Steuer-, Mess- und Auswerteeinheit verbunden.

Beim Verbinden der austauschbaren Übungsregion mit dem Speichermedium wird das Speichermedium mit den darauf bereit gestellten patientenindividuellen Daten und die spezifischen Parameter zu der Ausgestaltung der austauschbaren Übungsregion von der elektronischen Steuer-, Mess- und Auswerteeinheit erkannt. Dies geschieht, indem durch die Mittel zur Signalübertragung die patientenindividuellen Daten sowie die spezifischen Parameter zu der Ausgestaltung der austauschbaren Übungsregion an die elektronische Steuer-, Mess- und Auswerteeinheit übertragen und zugeordnet werden. Damit ist ein Datenaustausch beim Verbinden von dem Speichermedium mit der austauschbaren Übungsregion an die elektronische Steuer-, Mess- und Auswerteeinheit gewährleistet.

Vorteilhaft wird somit durch das Speichermedium ein zeitaufwendiger Zugriff auf eine komplette Datenbank wie sie beispielsweise in DE 20 2012 011 452 U1 beschrieben wird und welche alle patientenindividuellen Daten enthält und diese beispielsweise erst laden bzw. übermitteln muss, umgangen. Vorteilhaft ist ein schneller und unabhängiger Zugriff auf die patientenindividuellen Daten und spezifischen Parameter der anatomischen Nachbildung des Körperteils und/oder der austauschbaren Übungsregion gewährleistet, ohne dass beispielsweise eine komplette Datenbank aktualisiert werden muss.

Auf die auf dem Speichermedium enthaltenen patientenindividuelle Daten und spezifischen Parameter zu der Ausgestaltung der anatomischen Nachbildung des Körperteils und/oder der austauschbaren Übungsregion ist vorteilhaft jederzeit ein schneller Zugriff möglich. Das System ist nicht abhängig von einer zentralen Datenbank, auf welche der Zugriff beispielsweise durch eine Internetverbindung ist und es somit erforderlich wäre, eine stets verlässliche Verbindung zu gewährleisten. Vorteilhaft kann das Trainingsmodell somit auch an Orten ohne Internetverbindung verwendet werden. Weiterhin sind die patientenindividuellen Daten und die spezifischen Parameter zu der anatomischen Nachbildung des Körperteils und/oder der Ausgestaltung der austauschbaren Übungsregion beispielsweise im Falle eines Systemabsturzes vorteilhaft nicht betroffen, da sie nicht zentral in einer Datenbank, sondern auf einem Speichermedium abgespeichert sind.

Durch Übermittlung und Darstellung der patientenindividuellen Daten beim Verbinden der austauschbaren Übungsregion mit dem Speichermedium wird sofort erkannt, um welchen Patienten (Alter, Anatomie, Vorbefunde, Pathogenese, Krankheitsbild, bereits vorhandene Nachweise von bildgebenden Verfahren wie beispielsweise CT- oder Röntgenbilder) es sich handelt und welche operativen Eingriffe der Benutzer vorzunehmen hat. Durch gleichzeitige Übermittlung und Darstellung der spezifischen Parameter über die jeweilige Ausgestaltung der zu untersuchenden austauschbaren Übungsregion beim Verbinden der anatomischen Nachbildung des Körperteils mit der austauschbaren Übungsregion wird weiterhin sofort erkannt, um welche austauschbare Übungsregion es sich handelt.

In einer bevorzugten Ausführungsform wird das erfindungsgemäße System oder das erfindungsgemäße Verfahrens zur Validierung und zum Training invasiver Eingriffe in der Human- und Veterinärmedizin verwendet. Bevorzugt wird das System bei vaskulären Eingriffen verwendet.

In einer weiteren bevorzugten Ausführungsform wird das Computerprogrammprodukt zur Validierung und zum Training invasiver Eingriffe in der Human- und Veterinärmedizin verwendet.

In Ausführungsformen ist das System für Auszubildende, Fachärzte, Trainierenden oder Systemtestern zum Üben vorgesehen. In Ausführungsformen ist das System für Unternehmen vorgesehen, welche ihre eigenen operativen Instrumente und/oder ihre eigenen Implantate einsetzen, verwenden und/oder den Umgang mit diesen demonstrieren.

Die operativen Eingriffe umfassen chirurgische sowie minimal-invasive chirurgische Eingriffe.

Die operativen Eingriffe werden durch die bereitgestellten operativen Instrumente und/oder die bereitgestellten Implantate realisiert.

Zu den zu trainierenden chirurgischen Eingriffen zählen beispielsweise das Abtragen von Knochen, das die Insertion von medizinischen Implantaten, das Setzen von medizinischen Schrauben, die Verschaffung von Zugängen, die Entfernung von Gewebe wie beispielsweise Tumoren sowie das Schaffen operativer Zugänge zu den erkrankten Regionen.

Zu den zu trainierenden chirurgischen Eingriffen zählen auch minimal-invasive Methoden wie beispielsweise die medizinische Endoskopie, die minimal-invasive Wirbelsäulenchirurgie (u.a. die Dekompression von Rückenmarksbereichen und Fusionierung von Wirbeln nach Bandscheibenvorfällen), das Setzen von Implantaten sowie die Entfernung von Tumoren und/oder Knochenverwachsungen.

Vorteilhaft ist durch das erfindungsgemäße System ein effektives Training für den Benutzer möglich. Durch das optoelektronische Detektionsmittel kann das Training in Echtzeit überwacht werden. Durch die individuelle anatomische Gestaltung sowie die patientenindividuellen Daten auf dem Speichermedium kann der Benutzer sich auf eine individuelle und spezielle Problemstellung fokussieren.

Vorteilhaft umfasst das Trainingsmodell austauschbare Komponenten wie spülbares, knochenähnliches Material sowie pneumatisierte Knochen.

Zu den typisch zu übenden chirurgischen Eingriffen in der Felsenbeinregion zählen das Training der Mastoidektomie und Cochleostomie sowie das Setzen von Implantaten wie beispielsweise Mittel- und Innenohrimplantaten.

Die künstlichen Nasennebenhöhlenpatienten ermöglichen vor allem das Training der Schädelbasischirurgie sowie der Funktionalen Endoskopischen Sinus-Chirurgie (FESS), bei welcher u.a. die Eröffnung der Nasennebenhöhlen und das Entfernen von Tumoren (Hypophysentumor) oder Polypen zu den häufigen zu trainierenden Eingriffen zählen. Hier kann vorteilhaft der Umgang mit der Verletzung eines Hirnblutleiters bei der Operation simuliert werden.

Bei der Wirbelsäulenchirurgie kommen trainingsintensive Eingriffe sehr häufig bei der Operation an Bandscheiben bei einer Dekompression oder bei der Fixierung der Wirbelkörper (beispielsweise nach einer Fraktur) vor. Weiterhin können mit Hilfe des Trainingsmodells minimalinvasive OP-Techniken und manuelle Fähigkeiten wie das Setzen von Pedikelschrauben und Zwischenwirbelimplantaten (Cages) sowie der Fusionierung von Wirbeln erlernt werden.

In Ausführungsformen wird das erfindungsgemäße System und das erfindungsgemäße Verfahren für die Simulation einer Bluttransfusion verwendet. In weiteren Ausführungsformen wird das erfindungsgemäße System und das erfindungsgemäße Verfahren zum Training der Dialyse verwendet. Vorteilhaft kann damit die Blutentnahme und Blutzugabe durch das Schlauchsystem und/oder das mindestens eine künstliche Blutgefäß und die Pumpeneinheit realisiert und trainiert werden.

Für das Training der Dialyse wird hierzu der erste Vorlauf und der erste Rücklauf genutzt, um das Blut zur Blutwäsche mittels Kanülen zu entnehmen und nach erfolgter Blutwäsche dem Trainingsmodell wieder zuzuführen. Vorteilhaft wird durch den anatomisch nachgebildeten Hautüberzug dabei ein realistisches haptisches Gefühl beim Benutzer hervorgerufen.

In einer Ausführungsform können durch das Rückstellvermögen der anatomisch nachgebildeten Bestandteile der austauschbaren Übungsregion die Übungen wie beispielsweise die Blutabnahme oder die Dialyse mehrmals trainiert werden, ohne die Bestandteile gleich nach der ersten Übung zu entsorgen. Vorteilhaft werden damit Kosten und Ressourcen gespart.

Durch die Verwendung des Trainingsmodells werden die Qualität und der Lernerfolg der operativen Eingriffe validiert. Durch diese Erfolgskontrolle wird dem Benutzer sofort mitgeteilt, ob Risikostrukturen verletzt wurden oder die Operation ohne Störungen verlief.

Vorteilhaft erfolgt das Training unter realen Bedingungen, da das System in Echtzeit auf eine mögliche Verletzung der Risikostrukturen reagiert.

In Ausführungsformen der Erfindung sind die Komponenten des Trainingsmodells wiederverwendbar ausgebildet.

Je nach Art des ausgeführten Trainings sind alle bzw. manche Komponenten des Trainingsmodells wiederverwendbar. Nach dem Training wird die anatomische Nachbildung des Körperteils und/oder die austauschbare Übungsregion entnommen und beide Komponenten separat gereinigt. Die anatomische Nachbildung des Körperteils und/oder die austauschbare Übungsregion wird aus der Haltevorrichtung genommen und auch die Haltevorrichtung für die anatomische Nachbildung des Körperteils wird gereinigt. Weiterhin werden die verwendeten operativen Instrumente und/oder Implantate gesäubert.

Durch die mögliche Erweiterung der Trainer durch eine regelbare Blutpumpe wird auch das Notfallmanagement nach einem chirurgischen Fehler, wie dem Verletzen einer Arterie, zum Trainingsgegenstand.

Für die Realisierung der Erfindung ist es auch zweckmäßig, die vorbeschriebenen erfindungsgemäßen Ausgestaltungen, Ausführungsformen und Merkmale der Ansprüche in zweckmäßiger Anordnung miteinander zu kombinieren.

### Ausführungsbeispiel

Nachfolgend soll die Erfindung anhand eines Ausführungsbeispiels eingehender erläutert werden. Das Ausführungsbeispiel bezieht sich auf eine als Unterarm ausgebildete austauschbare Übungsregion und soll dabei die Erfindung beschreiben ohne diese zu beschränken.

Anhand einer Zeichnung wird die Erfindung näher erläutert. Dabei zeigt

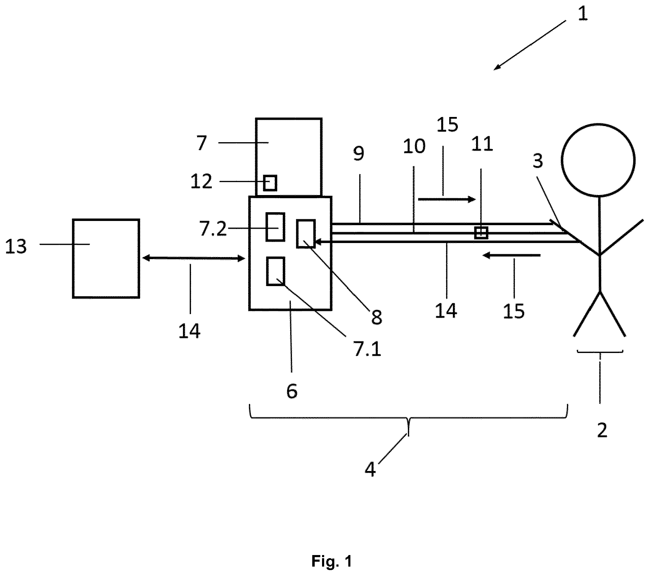

Fig. 1 eine schematische Darstellung des erfindungsgemäßen Systems.

Figur 1 zeigt eine schematische Darstellung des erfindungsgemäßen Systems 1. Die Skizze ist nicht maßstabsgetreu. Das erfindungsgemäße System 1 weist ein Trainingsmodell 2 auf, welches schematisch als Strichfigur dargestellt ist. In diesem Fall ist die austauschbare Übungsregion des Trainingsmodells 2 ein menschlicher Unterarm. Der Unterarm umfasst einen als künstliches Blutgefäß ausgebildeten anatomisch nachgebildeten Bestandteil 3, welcher in Figur 1 nicht detailgetreu wiedergegeben ist, sondern lediglich dem schematischen Arm der Strichfigur zugeordnet werden kann. Das erfindungsgemäße System 1 wird bei einer Systemspannung von 12 V betrieben.

Das erfindungsgemäße System 1 weist weiterhin einen als geschlossenen Kreislauf ausgebildeten Flüssigkeitskreislauf 4 auf, welcher ein als Tank ausgebildetes Flüssigkeitsreservoir 5, eine Pumpeneinheit 6 und ein Schlauchsystem aufweist. Die Flüssigkeit entspricht einem Blutimitat.

Die Pumpeneinheit 6 weist eine Steuereinheit 8 sowie zwei Pumpen 9 auf, wobei eine erste Pumpe 7.1 als selbstansaugende Wasserpumpe und eine zweite Pumpe als Kreiselpumpe 7.2 ausgebildet ist. Die erste Pumpe 7.1 dient der Entlüftung des Flüssigkeitskreislaufes 4 vor der Messung, bei welcher das Schlauchsystem und das künstliche Blutgefäß 3 mit Luft entlüftet werden. Anschließend erfolgt durch die erste Pumpe 7.1 das Befüllen des Flüssigkeitskreislaufes 4, insbesondere des Schlauchsystems und des Blutgefäßes 3 mit Flüssigkeit aus dem Flüssigkeitsreservoir 5. Die zweite Pumpe 7.2 sorgt für die Beförderung der Flüssigkeit im Flüssigkeitskreislauf 4 und des künstlichen Blutgefäßes 3 und simuliert Blutfluss und Pulsschlag.

Die erste Pumpe 7.1 wird bei einer Nennspannung von 12 V betrieben und weist eine Förderleistung von max. 2 l/min sowie eine Förderhöhe von max. 3 m auf. Der durch die erste Pumpe 7.1 gebildete Druck beträgt maximal 2 bar. Durch die erste Pumpe 7.1 wird eine Fördermenge von maximal 60 l/h in dem Flüssigkeitskreislauf 4 und dem anatomisch nachgebildeten Bestandteil 3 ermöglicht. Die zweite Pumpe 7.2 generiert einen mittleren Blutdruck von 50 mmHg bis 250 mmHg, eine Pulsamplitude von 0 % bis 150 % v. Normalwert und einen Volumenstrom von 400 l/min.

Das Schlauchsystem weist einen ersten Vorlauf 9 und einen ersten Rücklauf 10 auf. Die Pfeile geben dabei die Fließrichtung der Flüssigkeit 15 an. Der erste Vorlauf 9 und der erste Rücklauf 10 des Schlauchsystems verbinden den anatomisch nachgebildeten Bestandteil 3 mit den Pumpen 9 der Pumpeneinheit 6. Dabei ist zu beachten, dass der Vorlauf 9 und der Rücklauf 10 in Figur 1 nur schematisch dargestellt ist, indem diese beispielsweise jeweils nur in die Pumpeneinheit 6 verlaufen, ohne konkret die exakte Verbindung wiederzugeben. Das erste Ende des als Schlauch ausgebildeten ersten Vorlaufs 9 (in der Figur rechts) ist mit dem ersten Ende des anatomisch nachgebildeten Bestandteils 3 verbunden. Das erste Ende des als Schlauch ausgebildeten ersten Rücklaufs 10 (in der Figur rechts) ist mit dem zweiten Ende des anatomisch nachgebildeten Bestandteils 3 verbunden. Das zweite Ende des ersten Vorlaufs 9 (in der Figur links) ist mit der ersten Pumpe 7.1 und der zweiten Pumpe 7.2 verbunden. Das zweite Ende des ersten Rücklaufs 10 (in der Figur links) ist mit der ersten Pumpe 7.1 und der zweiten Pumpe 7.2 verbunden (die Verbindungen sind in der Figur nicht gezeigt).

Das Flüssigkeitsreservoir 5 ist direkt auf der Pumpeneinheit 6 aufgesetzt und mit der ersten Pumpe 7.1 und der zweiten Pumpe 7.2 der Pumpeneinheit 6 über jeweils eine Schnellkupplung verbunden.

Ein als Durchflusssensor ausgebildeter erster Sensor 11 ist im ersten Rücklauf 10 des Schlauchsystems angeordnet. Ein als Füllstandssensor ausgebildeter zweiter Sensor 12 ist im Flüssigkeitsreservoir 5 angeordnet. Bei einer Beschädigung bzw. Verletzung des anatomisch nachgebildeten Bestandteiles 3 misst der erste Sensor 11 die Änderung der Fördermenge der durch den Flüssigkeitskreislauf 4 und dem anatomisch nachgebildeten Bestandteil 3 beförderten Flüssigkeit. Der zweite Sensor 12 misst bei einer Beschädigung bzw. Verletzung des anatomisch nachgebildeten Bestandteiles 3 die Menge der austretenden Flüssigkeit. Sowohl der erste Sensor 11 als auch der zweite Sensor 12 sind über Mittel zur Signalübertragung 14 mit der Steuereinheit 8 der Pumpeneinheit 6 verbunden.

Durch eine Detektionsvorrichtung (in der Figur nicht dargestellt), welche an dem anatomisch nachgebildeten Bestandteil 3 angeordnet ist, werden die Eingriffe in der austauschbaren Übungsregion überwacht und erfasst. Die von der Detektionsvorrichtung erfasste Berührung oder Beschädigung bzw. Verletzung des anatomisch nachgebildeten Bestandteils 3 als elektrisches Signal und szenarioabhängige Steuerinformation durch Mittel zur Signalübertragung 14 an die mit der Detektionsvorrichtung gekoppelte Steuereinheit 8 der Pumpeneinheit 6 übermittelt.

Das erfindungsgemäße System 1 weist weiterhin eine elektronische Mess-, Steuer- und Auswerteeinheit 13 auf, welche durch Mittel zur Signalübertragung 14 mit der Steuereinheit 8 der Pumpeneinheit 6 verbunden ist, wodurch ein beidseitiger Informations- und Datenaustausch ermöglicht wird. Die elektronische Steuer-, Mess- und Auswerteeinheit 13 analysiert diese Informationen, welche als elektrische Signale von der Detektionsvorrichtung übermittelt wurden und das auf der elektronischen Steuer-, Mess- und Auswerteeinheit 13 gespeicherte Computerprogrammprodukt wählt darauf basierend einen Algorithmus zur Betriebsweise der ersten Pumpe 7.1 aus. Durch diesen Algorithmus wird u.a. die Strom-, Spannungs-, oder Frequenzänderung und damit einhergehend die Drehzahländerung der zweiten Pumpe 7.2 festgelegt und somit das Trainingsszenario beeinflusst.

### Bezugszeichen

- 1: System
- 2: Trainingsmodell
- 3: Anatomisch nachgebildeter Bestandteil
- 4: Flüssigkeitskreislauf
- 5: Flüssigkeitsreservoir
- 6: Pumpeneinheit
- 7.1: Erste Pumpe
- 7.2: Zweite Pumpe
- 8: Steuereinheit
- 9: Erster Vorlauf
- 10: Erster Rücklauf
- 11: Erster Sensor
- 12: Zweiter Sensor
- 13: Elektronische Steuer-, Mess- und Auswerteeinheit
- 14: Mittel zur Signalübertragung
- 15: Fließrichtung der Flüssigkeit

## Patentansprüche

1. System (1) zur Validierung und zum Training invasiver Eingriffe in der Human- und Veterinärmedizin, umfassend
- ein dem menschlichen oder tierischen Körper anatomisch nachgebildetes Trainingsmodell (2), aufweisend
∘ eine anatomische Nachbildung eines Körperteils des menschlichen oder tierischen Körpers, welche eine Aussparung aufweist, und
∘ eine anatomische Nachbildung einer austauschbaren Übungsregion, welche in die Aussparung der anatomischen Nachbildung des Körperteils einsetzbar ausgebildet ist und
▪ eine Vorderseite aufweist, welche von außen zugänglich ist,
▪ eine Rückseite aufweist, welche zumindest teilweise formschlüssig mit der Aussparung der anatomischen Nachbildung des Körperteils verbunden ist, und
▪ anatomisch nachgebildete Bestandteile (3) umfassend mindestens ein künstliches Blutgefäß und optional ein anatomisch nachgebildetes Nervengewebe und/oder einen anatomisch nachgebildeten Hautüberzug, welche in oder an der austauschbaren Übungsregion angeordnet sind,
- einen Flüssigkeitskreislauf (4), aufweisend
∘ mindestens ein Flüssigkeitsreservoir (5), welches eine Flüssigkeit enthält,
o mindestens eine Pumpeneinheit (6) zur Erzeugung eines des menschlichen Herz-Kreislauf-Systems nachempfundenen Herzschlages und Pulses in dem mindestens einen künstlichen Blutgefäß, wobei die Pumpeneinheit (6) mindestens eine Pumpe (7.1, 7.2), zur Beförderung der Flüssigkeit in dem Flüssigkeitskreislauf (4) und dem mindestens einen künstlichen Blutgefäß sowie zur Simulation des Blutflusses und des Pulses, und eine mit der mindestens einen Pumpe (7.1, 7.2) gekoppelten Steuereinheit (8) aufweist,
∘ ein Schlauchsystem umfassend
▪ mindestens zwei erste Schläuche, deren eine Enden jeweils lösbar mit den Enden des mindestens einen künstlichen Blutgefäßes verbunden sind und deren andere Enden jeweils lösbar mit der mindestens einen Pumpe (7.1, 7.2) der Pumpeneinheit (6) verbunden sind, wobei die mindestens zwei ersten Schläuche als erster Vorlauf (9) und als erster Rücklauf (10) dienen und
- mindestens eine elektronische Steuer-, Mess- und Auswerteeinheit (13), **dadurch gekennzeichnet, dass**
das System (1) weiterhin mindestens eine Detektionsvorrichtung zur Überwachung der Eingriffe in der austauschbaren Übungsregion aufweist, wobei die mindestens eine Detektionsvorrichtung in oder an den anatomisch nachgebildeten Bestandteilen (3) der austauschbaren Übungsregion angeordnet ist und als elektrisch leitfähige Struktur und/oder als lichtleitende Struktur ausgebildet ist,
wobei das System (1) derart ausgebildet ist, dass
- die Detektionsvorrichtung eine Interaktion des Benutzers mit den anatomisch nachgebildeten Bestandteilen (3) der austauschbaren Übungsregion erfasst, wobei unter einer Interaktion zumindest eine teilweise Berührung oder Beschädigung bzw. Verletzung der anatomisch nachgebildeten Bestandteile der austauschbaren Übungsregion verstanden wird, und
- die durch die Interaktion erzeugten Daten als elektrische Signale durch Mittel zur Signalübertragung (14) als rückgekoppelte elektrische Signale an die elektronische Steuer-, Mess- und Auswerteeinheit (13) übertragen werden, wobei die elektronische Steuer-, Mess- und Auswerteeinheit (13) die Daten analysiert und darauf basierend ein szenarioabhängiges Steuersignal durch die Mittel zur Signalübertragung (14) an die Steuereinheit (8) der Pumpeneinheit (8) übermittelt, wodurch eine selbstständige Reaktion und Steuerung der mindestens einen Pumpeneinheit (6) durch eine Erhöhung oder Absenkung der Spannung, des Stromes oder der Frequenz der mindestens einen Pumpe (7.1, 7.2) erfolgt.

2. System (1) nach Anspruch 1, **dadurch gekennzeichnet, dass** die mindestens eine Pumpe (7.1, 7.2) der Pumpeneinheit (6) als Spiralpumpe, Kreiselpumpe, Membranpumpe, Rollenpumpe, Schüttelpumpe, Wasserpumpe oder Kettenpumpe ausgebildet ist.

3. System (1) nach Anspruch 1 oder 2, weiterhin umfassend
- mindestens einen ersten Sensor (11), welcher unabhängig ausgewählt ist aus einem Durchflusssensor, einem Drucksensor oder einem Volumensensor, und in oder an dem mindestens einen künstlichen Blutgefäß und/oder dem Schlauchsystem angeordnet ist, und/oder
- mindestens einen zweiten Sensor (12), welcher als Füllstandssensor ausgebildet ist und im oder am Flüssigkeitsreservoir (5) angeordnet ist,
wobei der mindestens eine erste Sensor(11) und/oder der mindestens eine zweite Sensor (12) mit der Steuereinheit (8) der Pumpeneinheit (6) durch Mittel zur Signalübertragung (14) verbunden ist und bei Beschädigung des mindestens einen künstlichen Blutgefäßes die Änderung der Fördermenge oder des Druckes der Flüssigkeit und/oder die Menge der austretenden Flüssigkeit misst.

4. System (1) nach Anspruch 3, **dadurch gekennzeichnet, dass** der anatomisch nachgebildete Hautüberzug zumindest teilweise auf der austauschbaren Übungsregion angeordnet ist, wobei der anatomisch nachgebildete Hautüberzug zumindest teilweise aus einem elastischen Kunststoff besteht, ein hohes Rückstellvermögen aufweist und eine haptische Wahrnehmung des darunterliegenden mindestens einen künstlichen Blutgefäßes realisiert.

5. System (1) nach einem der Ansprüche 1 bis 4, **dadurch gekennzeichnet, dass** der Flüssigkeitskreislauf (4) als geschlossener oder offener Flüssigkeitskreislauf ausgestaltet ist.

6. Verfahren zur Validierung und zum Training invasiver Eingriffe in der Human- und Veterinärmedizin mit einem System (1) nach einem der Ansprüche 1 bis 5, **dadurch gekennzeichnet, dass**
- die als elektrisch leitfähige Struktur und/oder als lichtleitende Struktur ausgebildete Detektionsvorrichtung eine Interaktion des Benutzers mit den anatomisch nachgebildeten Bestandteilen (3) der austauschbaren Übungsregion erfasst, wobei unter einer Interaktion zumindest eine teilweise Berührung oder Beschädigung bzw. Verletzung der anatomisch nachgebildeten Bestandteile der austauschbaren Übungsregion verstanden wird, und
- anschließend die durch die Interaktion erzeugten Daten als elektrische Signale durch die Mittel zur Signalübertragung (14) als rückgekoppelte elektrische Signale an die mindestens eine elektronische Steuer-, Mess- und Auswerteeinheit (13) übertragen werden, wobei die elektronische Steuer-, Mess- und Auswerteeinheit (13) die Daten analysiert und darauf basierend ein szenarioabhängiges Steuersignal durch die Mittel zur Signalübertragung (14) an die Steuereinheit (8) der Pumpeneinheit (6) übermittelt, wodurch eine selbstständige Reaktion und Steuerung der mindestens einen Pumpeneinheit (6) durch eine Erhöhung oder Absenkung der Spannung, des Stromes oder der Frequenz der mindestens einen Pumpe (7.1, 7.2) erfolgt.

7. Verfahren nach Anspruch 6 mit einem System (1) nach einem der Ansprüche 3 bis 5, wobei die Menge des aus dem mindestens einen künstlichen Blutgefäß austretenden Flüssigkeit durch den mindestens einen ersten Sensor (11) und/oder den mindestens einen zweiten Sensor (12) gemessen wird und als rückgekoppeltes elektrisches Signal durch die Mittel zur Signalübertragung (14) an die elektronische Steuer-, Mess- und Auswerteeinheit (13) übertragen werden, wobei die elektronische Steuer-, Mess- und Auswerteeinheit (13) die Daten analysiert und darauf basierend ein szenarioabhängiges Steuersignal durch die Mittel zur Signalübertragung (14) an die Steuereinheit (8) der Pumpeneinheit (6) übermittelt, wodurch eine selbstständige Reaktion und Steuerung der mindestens einen Pumpeneinheit (6) durch eine Erhöhung oder Absenkung der Spannung, des Stromes oder der Frequenz der mindestens einen Pumpe (7.1, 7.2) erfolgt.

8. Verfahren nach Anspruch 6 oder 7, **dadurch gekennzeichnet, dass** die Detektionsvorrichtung eine Interaktion des Benutzers mit den anatomisch nachgebildeten Bestandteilen (3) der austauschbaren Übungsregion erfasst, und anschließend die durch die Interaktion erzeugten Daten als elektrische Signale durch die Mittel zur Signalübertragung (14) an die Steuereinheit (8) der Pumpeneinheit (6) übertragen werden, und die Steuereinheit (8) die Daten als rückgekoppelte elektrische Signale durch Mittel zur Signalübertragung (14) an die elektronische Steuer-, Mess- und Auswerteeinheit (13) überträgt.

9. Verfahren nach einem der Ansprüche 6 bis 8, **dadurch gekennzeichnet, dass** durch das rückgekoppelte elektrische Signal der Trainingsverlauf sowie die Pulskurve und die Fördermenge im Flüssigkeitskreislauf (4) in Echtzeit variiert, überwacht und analysiert wird.

10. Verfahren nach einem der Ansprüche 6 bis 9, **dadurch gekennzeichnet, dass** das mindestens eine künstliche Blutgefäß und die durchfließende Flüssigkeitsmenge als Puls ertastbar ist und/oder sich die aus dem mindestens einen künstlichen Blutgefäß austretende Flüssigkeit unter dem Hautüberzug sammelt und als Nachbildung eines Aneurysmas ertastbar ist.

11. Computerprogrammprodukt, welches zur Durchführung des Verfahrens gemäß einer der Ansprüche 6 bis 10 dient.

12. Elektronische Steuer-, Mess- und Auswerteeinheit (13), auf der das Computerprogrammprodukt nach Anspruch 11 gespeichert ist.

13. Verwendung eines Systems (1) nach einem der Ansprüche 1 bis 5 oder eines Verfahrens nach einem der Ansprüche 6 bis 10 zur Validierung und zum Training invasiver Eingriffe in der Human- und Veterinärmedizin.

14. Verwendung eines Computerprogrammprodukts nach Anspruch 11 zur Validierung und zum Training invasiver Eingriffe in der Human- und Veterinärmedizin.

## Claims

1. System (1) for validating and training invasive procedures in human and veterinary medicine, comprising
- a training model (2), which anatomically reproduces the human or animal body, comprising
∘ an anatomical reproduction of a body part of the human or animal body, which has a recess, and
∘ an anatomical reproduction of an interchangeable practice region, which can be inserted into the recess of the anatomical reproduction of the body part, and
▪ has a front side, which is accessible from the outside,
▪ has a rear side, which is at least partially form-fittingly connected to the recess of the anatomical reproduction of the body part, and
▪ anatomically reproduced components (3), comprising at least one artificial blood vessel and optionally anatomically reproduced nerve tissue and/or an anatomically reproduced skin covering, which are arranged in or on the interchangeable practice region,
- a liquid circuit (4), comprising
∘ at least one liquid reservoir (5), which contains a liquid,
∘ at least one pump unit (6) for generating a heartbeat and pulse modeled on the human cardiovascular system in the at least one artificial blood vessel, the pump unit (6) comprising at least one pump (7.1, 7.2), for conveying the liquid in the liquid circuit (4) and the at least one artificial blood vessel, and for simulating the blood flow and the pulse, and comprising a control unit (8) coupled to the at least one pump (7.1, 7.2),
∘ a tubing system comprising
▪ at least two first tubes, one end of each of which is detachably connected to the ends of the at least one artificial blood vessel, and the other ends of which are each detachably connected to the at least one pump (7.1, 7.2) of the pump unit (6), the at least two first tubes acting as a first supply (9) and as a first return (10) and
- at least one electronic control, measuring and evaluation unit (13),
**characterized in that**
the system (1) further comprises at least one detection device for monitoring the procedures in the interchangeable practice region, the at least one detection device being arranged in or on the anatomically reproduced components (3) of the interchangeable practice region and being designed as an electrically conductive structure and/or as a light- conducting structure,
the system (1) being designed such that
- the detection device detects an interaction of the user with the anatomically reproduced components (3) of the interchangeable practice region, an interaction being understood to mean at least partial contact or damage or injury to the anatomically reproduced components of the interchangeable practice region, and
- the data generated by the interaction are transmitted as electrical signals by means for signal transmission (14) as electrical feedback signals to the electronic control, measuring and evaluation unit (13), the electronic control, measuring and evaluation unit (13) analyzing the data and, based thereon, transmitting a scenario-dependent control signal by the means for signal transmission (14) to the control unit (8) of the pump unit (8), as a result of which an automatic response and control of the at least one pump unit (6) takes place by increasing or decreasing the voltage, the current or the frequency of the at least one pump (7.1, 7.2).

2. System (1) according to claim 1, **characterized in that** the at least one pump (7.1, 7.2) of the pump unit (6) is designed as a spiral pump, centrifugal pump, diaphragm pump, roller pump, shaking pump, water pump or chain pump.

3. System (1) according to claim 1 or 2, further comprising
- at least one first sensor (11), which is independently selected from a flow sensor, a pressure sensor or a volume sensor, and is arranged in or on the at least one artificial blood vessel and/or the tube system, and/or
- at least one second sensor (12), which is designed as a fill level sensor and is arranged in or on the liquid reservoir (5),
wherein the at least one first sensor (11) and/or the at least one second sensor (12) is connected to the control unit (8) of the pump unit (6) by means for signal transmission (14) and, when the at least one artificial blood vessel is damaged, measures the change in the delivery rate or the pressure of the liquid and/or the amount of exiting liquid.

4. System (1) according to claim 3, **characterized in that** the anatomically reproduced skin covering is arranged at least partially on the interchangeable practice region, the anatomically reproduced skin covering consisting at least partially of a elastic plastics material, having a high resilience and providing a haptic perception of the underlying at least one artificial blood vessel.

5. System (1) according to any of claims 1 to 4, **characterized in that** the liquid circuit (4) is designed as a closed or open liquid circuit.

6. Method for validating and training invasive procedures in human and veterinary medicine using a system (1) according to any of claims 1 to 5, **characterized in that**
- the detection device designed as an electrically conductive structure and/or as a light-conducting structure detects an interaction of the user with the anatomically reproduced components (3) of the interchangeable practice region, an interaction being understood to mean at least partial contact or damage or injury to the anatomically reproduced components of the interchangeable practice region, and
- the data generated by the interaction are subsequently transmitted as electrical signals by the means for signal transmission (14) as electrical feedback signals to the at least one electronic control, measuring and evaluation unit (13), the electronic control, measuring and evaluation unit (13) analyzing the data and, based thereon, transmitting a scenario-dependent control signal by the means for signal transmission (14) to the control unit (8) of the pump unit (6), as a result of which an automatic response and control of the at least one pump unit (6) takes place by increasing or decreasing the voltage, the current or the frequency of the at least one pump (7.1, 7.2).

7. Method according to claim 6, with a system (1) according to any of claims 3 to 5, wherein the quantity of the liquid exiting the at least one artificial blood vessel is measured by the at least one first sensor (11) and/or the at least one second sensor (12) and is transmitted as an electrical feedback signal by the means for signal transmission (14) to the electronic control, measuring and evaluation unit (13), wherein the electronic control, measuring and evaluation unit (13) analyzes the data and, based thereon, transmits a scenario-dependent control signal by the means for signal transmission (14) to the control unit (8) of the pump unit (8), as a result of which an automatic response and control of the at least one pump unit (6) takes place by increasing or decreasing the voltage, the current or the frequency of the at least one pump (7.1, 7.2).

8. Method according to claim 6 or 7, **characterized in that** the detection device detects an interaction of the user with the anatomically reproduced components (3) of the interchangeable practice region, and the data generated by the interaction are subsequently transmitted as electrical signals by the means for signal transmission (14) to the control unit (8) of the pump unit (6), and the control unit (8) transmits the data as electrical feedback signals by the means for signal transmission (14) to the electronic control, measuring and evaluation unit (13).

9. Method according to any of claims 6 to 8, **characterized in that**, owing to the electrical feedback signal, the training history and the pulse curve and the delivery rate in the liquid circuit (4) are varied, monitored and analyzed in real time.

10. Method according to any of claims 6 to 9, **characterized in that** the at least one artificial blood vessel and the amount of liquid flowing through it can be felt as a pulse and/or the liquid exiting the at least one artificial blood vessel accumulates under the skin covering and can be felt as a reproduction of an aneurysm.

11. Computer program product which is used to carry out the method according to any of claims 6 to 10.

12. Electronic control, measuring and evaluation unit (13), on which the computer program product according to claim 11 is stored.

13. Use of a system (1) according toany of claims 1 to 5 or a method according to any of claims 6 to 10 for validating and training invasive procedures in human and veterinary medicine.

14. Use of a computer program product according to claim 11 for validating and training invasive procedures in human and veterinary medicine.

## Revendications

1. Système (1) de validation et d'apprentissage de procédures invasives dans la médecine humaine et vétérinaire, comprenant
- un modèle d'apprentissage (2) reproduisant anatomiquement le corps humain ou d'un animal, présentant
∘ une reproduction anatomique d'une partie de corps du corps humain ou d'un animal, laquelle reproduction anatomique présente une cavité, et
∘ une reproduction anatomique d'une zone d'entraînement remplaçable, laquelle reproduction anatomique est conçue de manière à pouvoir être emboîtée dans la cavité de la reproduction anatomique de la partie de corps et
▪ présente une face frontale accessible de l'extérieur,
▪ présente une face arrière reliée au moins en partie par complémentarité de forme à la cavité de la reproduction anatomique de la partie de corps, et
▪ des éléments (3) reproduits anatomiquement et comprenant au moins un vaisseau sanguin artificiel et éventuellement un tissu nerveux reproduit anatomiquement et/ou un revêtement de peau reproduit anatomiquement, lesquels sont disposés dans ou sur la zone d'entraînement remplaçable,
- un circuit de fluide (4), présentant
∘ au moins un réservoir de fluide (5) contenant un fluide,
∘ au moins une unité de pompage (6) destinée à générer un battement de coeur et un pouls imitant le système cardiovasculaire humain dans l'au moins un vaisseau sanguin artificiel, l'unité de pompage (6) présentant au moins une pompe (7.1, 7.2) pour le transport du fluide dans le circuit de fluide (4) et l'au moins un vaisseau sanguin artificiel et pour la simulation du flux sanguin et du pouls, et une unité de commande (8) couplée à l'au moins une pompe (7.1, 7.2),
∘ une tubulure comprenant
▪ au moins deux premiers tuyaux dont les premières extrémités sont respectivement reliées de manière amovible aux extrémités de l'au moins un vaisseau sanguin artificiel et dont les autres extrémités sont respectivement reliées de manière amovible à l'au moins une pompe (7.1, 7.2) de l'unité de pompage (6), les au moins deux premiers tuyaux servant de premier tuyau d'alimentation (9) et de premier tuyau de retour (10) et
- au moins une unité électronique de commande, de mesure et d'évaluation (13), **caractérisée en ce que**
le système (1) présente en outre au moins un dispositif de détection pour la surveillance des procédures dans la zone d'entraînement remplaçable, l'au moins un dispositif de détection étant disposé dans ou sur les éléments (3) reproduits anatomiquement de la zone d'entraînement remplaçable et étant conçu sous forme de structure électriquement conductrice et/ou de structure conductrice de lumière,
le système (1) étant conçu de sorte que
- le dispositif de détection détecte une interaction de l'utilisateur avec les éléments (3) reproduits anatomiquement de la zone d'entraînement remplaçable, une interaction étant entendue comme au moins un contact ou un endommagement ou une blessure partiel sur les éléments reproduits anatomiquement de la zone d'entraînement remplaçable, et
- les données générées par l'interaction sous forme de signaux électriques sont transmises, à l'aide de moyens permettant la transmission de signaux (14), à l'unité électronique de commande, de mesure et d'évaluation (13) sous forme de signaux électriques asservis, l'unité électronique de commande, de mesure et d'évaluation (13) analysant les données et communiquant, sur la base de celles-ci, à l'aide des moyens permettant la transmission de signal (14), un signal de commande dépendant d'un scénario à l'unité de commande (8) de l'unité de pompage (8), moyennant quoi une réaction et une commande autonomes de l'au moins une unité de pompage (6) sont effectuées sous l'action d'une augmentation ou d'une baisse de la tension, du flux ou de la fréquence de l'au moins une pompe (7.1, 7.2).

2. Système (1) selon la revendication 1, **caractérisé en ce que** l'au moins une pompe (7.1, 7.2) de l'unité de pompage (6) est conçue sous forme de pompe à spirale, pompe centrifuge, pompe à membrane, pompe à rouleaux, pompe siphon, pompe à eau ou pompe à chaîne.

3. Système (1) selon la revendication 1 ou 2, comprenant en outre
- au moins un premier capteur (11) choisi indépendamment parmi un capteur de débit, un capteur de pression ou un capteur de volume, et disposé dans ou sur l'au moins un vaisseau sanguin artificiel et/ou la tubulure, et/ou
- au moins un second capteur (12) conçu sous forme de capteur de niveau et disposé dans ou sur le réservoir de fluide (5),
l'au moins un premier capteur (11) et/ou l'au moins un second capteur (12) étant connectés à l'unité de commande (8) de l'unité de pompage (6) à l'aide de moyens permettant la transmission de signal (14) et mesurant, en cas d'endommagement de l'au moins un vaisseau sanguin artificiel, la modification du débit ou de la pression du fluide et/ou la quantité du fluide sortant.

4. Système (1) selon la revendication 3, **caractérisé en ce que** le revêtement de peau reproduit anatomiquement est disposé au moins partiellement sur la zone d'entraînement remplaçable, le revêtement de peau reproduit anatomiquement étant constitué au moins partiellement d'une matière plastique élastique, présentant une reprise élastique élevée et créant une perception haptique de l'au moins un vaisseau sanguin artificiel sous-jacent.

5. Système (1) selon l'une des revendications 1 à 4, **caractérisé en ce que** le circuit de fluide (4) est conçu sous forme de circuit de fluide fermé ou ouvert.

6. Procédé de validation et d'apprentissage de procédures invasives dans la médecine humaine et vétérinaire comportant un système (1) selon l'une des revendications 1 à 5, **caractérisé en ce que**
- le dispositif de détection conçu sous forme de structure électriquement conductrice et/ou de structure conductrice de lumière détecte une interaction de l'utilisateur avec les éléments (3) reproduits anatomiquement de la zone d'entraînement remplaçable, une interaction étant entendue comme au moins un contact ou un endommagement ou une blessure partiel sur les éléments reproduits anatomiquement de la zone d'entraînement remplaçable, et
- les données générées par l'interaction sous forme de signaux électriques sont ensuite transmises, à l'aide des moyens permettant la transmission de signal (14), à l'au moins une unité électronique de commande, de mesure et d'évaluation (13) sous forme de signaux électriques asservis, l'unité électronique de commande, de mesure et d'évaluation (13) analysant les données et communiquant, sur la base de celles-ci, à l'aide des moyens permettant la transmission de signal (14), un signal de commande dépendant d'un scénario à l'unité de commande (8) de l'unité de pompage (6), moyennant quoi une réaction et une commande autonomes de l'au moins une unité de pompage (6) sont effectuées sous l'action d'une augmentation ou d'une baisse de la tension, du flux ou de la fréquence de l'au moins une pompe (7.1, 7.2).

7. Procédé selon la revendication 6 comportant un système (1) selon l'une des revendications 3 à 5,
la quantité de fluide sortant de l'au moins un vaisseau sanguin artificiel étant mesurée par l'au moins un premier capteur (11) et/ou l'au moins un second capteur (12) et étant transmise, à l'aide des moyens permettant la transmission de signal (14), à l'unité électronique de commande, de mesure et d'évaluation (13) sous forme de signal électrique asservi, l'unité électronique de commande, de mesure et d'évaluation (13) analysant les données et communiquant, sur la base de celles-ci, à l'aide des moyens permettant la transmission de signal (14), un signal de commande dépendant d'un scénario à l'unité de commande (8) de l'unité de pompage (6), moyennant quoi une réaction et une commande autonomes de l'au moins une unité de pompage (6) sont effectuées sous l'action d'une augmentation ou d'une baisse de la tension, du flux ou de la fréquence de l'au moins une pompe (7.1, 7.2).

8. Procédé selon la revendication 6 ou 7, **caractérisé en ce que** le dispositif de détection détecte une interaction de l'utilisateur avec les éléments (3) reproduits anatomiquement de la zone d'entraînement remplaçable, et les données générées par l'interaction sont ensuite transmises, à l'aide des moyens permettant la transmission de signal (14), à l'unité de commande (8) de l'unité de pompage (6) sous forme de signaux électriques, et l'unité de commande (8) transmet les données, à l'aide des moyens permettant la transmission de signal (14), à l'unité électronique de commande, de mesure et d'évaluation (13) sous forme de signaux électriques asservis.

9. Procédé selon l'une des revendications 6 à 8, **caractérisé en ce que** le processus d'apprentissage ainsi que la courbe de pouls et le débit dans le circuit de fluide (4) sont modifiés, surveillés et analysés en temps réel sous l'action du signal électrique asservi.

10. Procédé selon l'une des revendications 6 à 9, **caractérisé en ce que** l'au moins un vaisseau sanguin artificiel et la quantité de fluide en écoulement peuvent être détectés comme pouls et/ou le fluide sortant de l'au moins un vaisseau sanguin artificiel s'accumule sous le revêtement de peau et peut être détecté comme reproduction d'un anévrisme.

11. Produit programme informatique servant à la mise en oeuvre du procédé selon l'une des revendications 6 à 10.

12. Unité électronique de commande, de mesure et d'évaluation (13) sur laquelle est stocké le produit programme informatique selon la revendication 11.

13. Utilisation d'un système (1) selon l'une des revendications 1 à 5 ou d'un procédé selon l'une des revendications 6 à 10 pour la validation et l'apprentissage de procédures invasives dans la médecine humaine et vétérinaire.

14. Utilisation d'un produit programme informatique selon la revendication 11 pour la validation et l'apprentissage de procédures invasives dans la médecine humaine et vétérinaire.
